(19) Europäisches Patentamt
European Patent Office
Office européen des brevets

(11) EP 4 438 636 A1

(12) EUROPEAN PATENT APPLICATION
published in accordance with Art. 153(4) EPC

(43) Date of publication:
**02.10.2024 Bulletin 2024/40**

(21) Application number: **22898979.4**

(22) Date of filing: **22.11.2022**

(51) International Patent Classification (IPC):
***C08F 210/16*** (2006.01) ***C08F 210/14*** (2006.01)
***C08F 4/659*** (2006.01) ***C08F 4/6592*** (2006.01)
***C08F 4/60*** (2006.01)

(52) Cooperative Patent Classification (CPC):
**C08F 4/02; C08F 4/60; C08F 4/659; C08F 4/6592; C08F 210/14; C08F 210/16**

(86) International application number:
**PCT/KR2022/018463**

(87) International publication number:
**WO 2023/096297 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.11.2021 KR 20210162175**

(71) Applicant: **Hanwha Solutions Corporation**
**Jung-gu**
**Seoul 04541 (KR)**

(72) Inventors:
- **KIM, Ahreum**
**Daejeon 34128 (KR)**
- **PARK, Hye Ran**
**Daejeon 34128 (KR)**
- **PARK, Jeong Hyun**
**Daejeon 34128 (KR)**
- **LIM, Jae Yun**
**Daejeon 34128 (KR)**
- **SEO, Junho**
**Daejeon 34128 (KR)**
- **JOUNG, Ui Gap**
**Daejeon 34128 (KR)**

(74) Representative: **Berggren Oy**
**P.O. Box 16**
**Eteläinen Rautatiekatu 10A**
**00101 Helsinki (FI)**

# (54) POLYOLEFIN HAVING EXCELLENT PROCESSABILITY AND PROCESS FOR PREPARING SAME

(57) The present invention pertains to a polyolefin having excellent processability. A polyolefin prepared in the presence of a hybrid metallocene catalyst according to an embodiment of the present invention has a broad unimodal molecular weight distribution with a shoulder, and has excellent high-speed processability.

[FIG. 2]

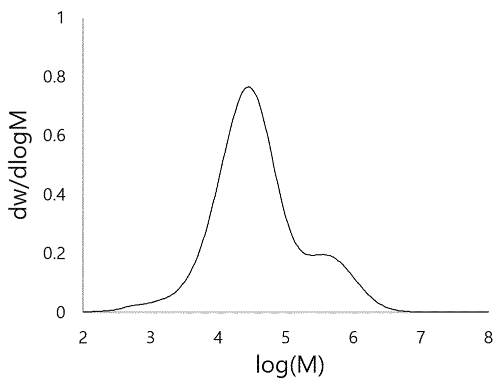

## Description

[Technical Field]

The present invention relates to an olefin-based polymer having excellent processability and a method for preparing the same. Specifically, the present invention relates to an olefin-based polymer which is polymerized in the presence of a hybrid metallocene catalyst, has a broad unimodal molecular weight distribution having a shoulder, and has excellent processability, and a method for preparing the same.

[Background Art]

Polyolefin-based polymers are used in various ways in real life as materials for shopping bags, greenhouses, fishing nets, cigarette wrappers, ramen bags, yogurt bottles, battery cases, car bumpers, interior materials, shoe soles, washing machines, and the like.

Conventionally, polyolefin-based polymers such as polyethylene, polypropylene, and ethylene $\alpha$-olefin copolymers and copolymer thereof are prepared by heterogeneous catalysts such as a Ziegler-Natta catalyst formed of a titanium compound and an alkyl aluminum compound.

Recently, a method for preparing polyolefin using a metallocene catalyst which is a homogeneous catalyst having very high catalytic activity has been studied. A metallocene catalyst is a compound in which a ligand such as cyclopentadienyl, indenyl, or cycloheptadienyl is coordinated to a transition metal or a transition metal halogen compound, and has a sandwich structure as a basic form. Herein, it has various molecular structures depending on a ligand form and the type of center metal.

A Ziegler-Natta catalyst which is a heterogeneous catalyst has an active site having heterogeneous properties, since a metal component as the active site is dispersed on an inert solid surface; however, the metallocene catalyst is known as a single-site catalyst having identical polymerization properties in all active sites, since it is one compound having a certain structure.

The metallocene catalyst as such is easily used for copolymerization and may adjust a stereostructure of a polymer depending on catalyst symmetry, and a polymer prepared therefrom has a narrow molecular weight distribution and a uniform comonomer distribution.

However, a polymer prepared by the metallocene catalyst has excellent mechanical strength, but low processability, due to the narrow molecular weight distribution.

Meanwhile, a polyolefin obtained using a chrome or Zigler-Natta catalyst has been mainly used in the manufacture of local area network (LAN) cables. In order to increase production in LAN cable manufacture, high-speed processing is needed, and a melt fracture or shark skin occurs during the high-speed processing, in some cases. Besides, since a polyolefin prepared by the metallocene catalyst has low processability, it is known that the polyolefin is not appropriate for LAN cable manufacture.

In order to improve processability of the polyolefin prepared by the metallocene catalyst, there was an attempt to mix different kinds of metallocene catalysts to prepare a supported catalyst. For example, U.S. Patent Nos. 4,935,474, 6,828,394, and 6,894,128, Korean Patent No. 1437509, and U.S. Patent No. 6,841,631 disclose a method for preparing polyolefin having a bimodal molecular weight distribution by mixing catalysts having different reactivities to a comonomer.

However, since there is a significant difference in molecular weight of resins by the two catalysts, a molecular weight distribution is too broad or a difference in the molecular weight is insignificant, and thus, sometimes, there is no significant difference as compared with a single metallocene catalyst. In addition, the molecular weight of a polyolefin has better processability as the bimodal shape is clearer in some cases, but has poor processability as compared with a polyolefin having a unimodal shape, in other cases.

**[Disclosure]**

[Technical Problem]

An object of the present invention is to provide an olefin-based polymer which is polymerized in the presence of a hybrid metallocene catalyst, has a broad unimodal molecular weight distribution having a shoulder, and has excellent high-speed processability, and a method for preparing the same.

[Technical Solution]

In one general aspect, an olefin-based polymer which has a density of 0.930 to 0.970 g/cm3, a melt index ($I_{2.16}$) measured with a load of 2.16 kg at 190°C of 0.1 to 5.0 g/10 min, a ratio (melt flow ratio; MFR) between a melt index

($I_{21.6}$) measured with a load of 21.6 kg and a melt index ($I_{2.16}$) measured with a load of 2.16 kg at 190°C of 30 to 200, a unimodal molecular weight distribution having a shoulder when measured by gel permeation chromatography (GPC), and a shear rate defined by the following Equation 1 at which a melt fracture or shark skin is shown when measured with a capillary rheometer, of 500 $sec^{-1}$ or more is provided.

[Equation 1]

$$\gamma_{ap} = \frac{4V}{\pi R^3}$$

wherein $\gamma_{ap}$ is an apparent shear rate ($sec^{-1}$), V is a volume flow ($mm^3/sec$) produced by a piston, and R is a radius (mm) of a round hole capillary.

In another general aspect, an olefin-based polymer which is prepared by polymerization of ethylene and at least one $\alpha$-olefin in the presence of a hybrid metallocene catalyst, and has a density of 0.930 to 0.970 $g/cm^3$, a melt index ($I_{2.16}$) measured with a load of 2.16 kg at 190°C of 0.1 to 5.0 g/10 min, a ratio (melt flow ratio; MFR) between a melt index ($I_{21.6}$) measured with a load of 21.6 kg and a melt index ($I_{2.16}$) measured with a load of 2.16 kg at 190°C of 30 to 200, a unimodal molecular weight distribution when measured by gel permeation chromatography (GPC), and a shear rate defined by Equation 1 at which a melt fracture or shark skin is shown when measured with a capillary rheometer, of 500 $sec^{-1}$ or more is provided.

In another general aspect, an olefin-based polymer which is prepared by polymerization of ethylene and at least one $\alpha$-olefin in the presence of a hybrid metallocene catalyst, and has a density of 0.930 to 0.970 g/cm3, a melt index ($I_{2.16}$) measured with a load of 2.16 kg at 190°C of 0.1 to 5.0 g/10 min, a ratio (melt flow ratio; MFR) between a melt index ($I_{21.6}$) measured with a load of 21.6 kg and a melt index ($I_{2.16}$) measured with a load of 2.16 kg at 190°C of 30 to 200, a unimodal molecular weight distribution when measured by gel permeation chromatography (GPC), and a shear rate defined by Equation 1 at which a melt fracture or shark skin is shown when measured with a capillary rheometer, of 500 $sec^{-1}$ or more is provided.

In a specific example of the present invention, the olefin-based polymer may have the density of 0.930 to 0.965 g/cm3, preferably 0.935 to 0.960 g/cm3, the melt index ($I_{2.16}$) measured with a load of 2.16 kg at 190°C of 0.5 to 4.5 g/10 min, preferably 0.5 to 4.0 g/10 min, the ratio (MFR) between the melt index ($I_{21.6}$) measured with a load of 21.6 kg and the melt index ($I_{2.16}$) measured with a load of 2.16 kg at 190°C of 30 to 150, preferably 40 to 135, and the shear rate at which a melt fracture or shark skin is shown when measured with a capillary rheometer, of 700 $sec^{-1}$ or more, preferably 750 $sec^{-1}$ or more.

In a specific example of the present invention, the olefin-based polymer may be prepared by polymerization of ethylene and at least one $\alpha$-olefin in the presence of a hybrid metallocene catalyst, and the hybrid metallocene catalyst may include: (a) at least one first transition metal compound selected from transition metal compounds represented by the following Chemical Formula 1 and transition metal compounds represented by the following Chemical Formula 2; (b) at least one second transition metal compound selected from transition metal compounds represented by the following Chemical Formula 3; (c) at least one third transition metal compound selected from transition metal compounds represented by the following Chemical Formula 4, transition metal compounds represented by the following Chemical Formula 5a, and transition metal compounds represented by the following Chemical Formula 5b; and (d) a cocatalyst compound:

[Chemical Formula 1] [Chemical Formula 2] [Chemical Formula 3]

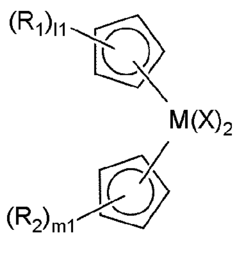

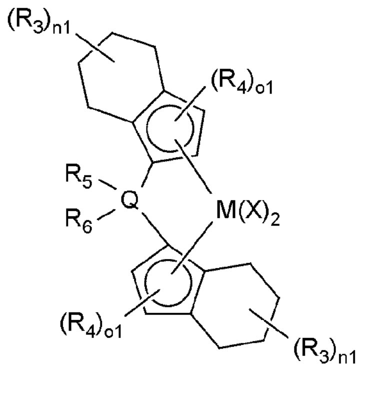

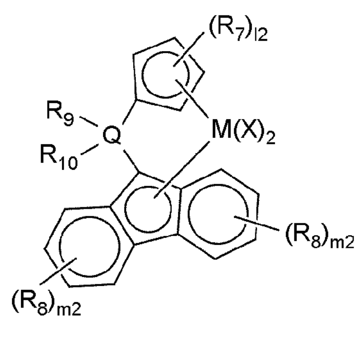

[Chemical Formula 4] [Chemical Formula 5a]

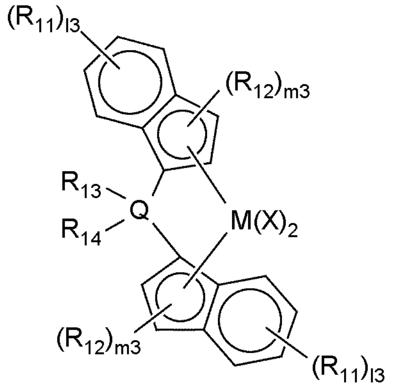

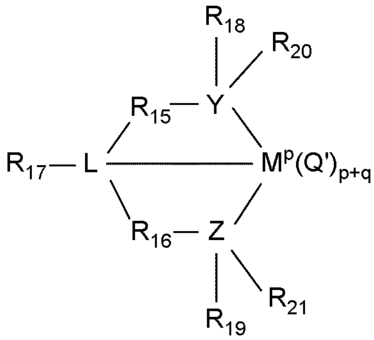

[Chemical Formula 5b]

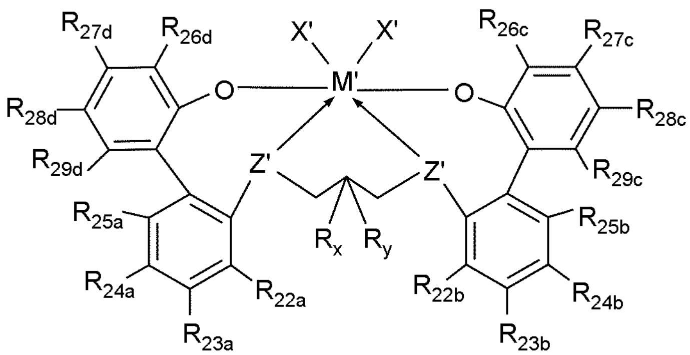

wherein l1 and m1 are independently of each other an integer of 0 to 5,
l2, l3, m2, and n1 are independently of one another an integer of 0 to 4;
m3 and o1 are independently of each other an integer of 0 to 2,
p is an oxidation state of M, and is +3, +4, or +5,
q is a formal charge of a YZL ligand, and is 0, -1, - 2, or -3,
M is independently of each other titanium (Ti), zirconium (Zr), or hafnium (Hf),
M' is titanium, zirconium, or hafnium, and is in a formal oxidation state of +2, +3, or +4,
X is independently of each other a halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido,
X' is independently of each other alkyl,
Q is independently of each other carbon (C), silicon (Si), germanium (Ge), or tin (Sn),
Q' is an anionic leaving group and is independently of each other hydrogen, a substituted or unsubstituted $C_{1-40}$ hydrocarbon group, a substituted or unsubstituted $C_{1-40}$ heterohydrocarbon group, a heteroatom, or a halogen,
L is a Group 15 or group 16 element, and preferably nitrogen,
Y is a Group 15 element, preferably nitrogen or phosphorus, and more preferably nitrogen,
Z is a Group 15 element, preferably nitrogen or phosphorus, and more preferably nitrogen,
Z' is independently of each other -O-, -S-, -N($C_{1-40}$ hydrocarbon group)-, or -P($C_{1-40}$ hydrocarbon group)-,
$R_1$ to $R_4$, $R_7$, $R_8$, $R_{11}$, and $R_{12}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but these may or may not be independently of each other connected to an adjacent group to form a substituted or unsubstituted, saturated or unsaturated $C_{4-20}$ ring,
$R_5$, $R_6$, $R_9$, $R_{10}$, $R_{13}$, and $R_{14}$ are independently of each other substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or

unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but $R_5$ and $R_6$, $R_9$ and $R_{10}$, and $R_{13}$ and $R_{14}$ may or may not be independently of one another connected to each other to form a substituted or unsubstituted, saturated or unsaturated $C_{2-20}$ ring,

$R_{15}$ and $R_{16}$ are independently of each other a $C_{1-20}$ hydrocarbon group or a heteroatom-containing group, in which the heteroatom is silicon, germanium, tin, lead, or phosphorus, or $R_{15}$ and $R_{16}$ may be connected to each other,

$R_{17}$ does not exist, or is hydrogen, $C_{1-20}$ alkyl, a halogen, or a heteroatom-containing group,

$R_{18}$ and $R_{19}$ are independently of each other an alkyl group, an aryl group, a substituted aryl group, a cyclic alkyl group, a substituted cyclic alkyl group, or a polycyclic system,

$R_{20}$ and $R_{21}$ independently of each other do not exist, or may be hydrogen, an alkyl group, a halogen, a heteroatom, a hydrocarbon group, or a heteroatom-containing group,

$R_x$ and $R_y$ are independently of each other a substituted or unsubstituted $C_{1-40}$ hydrocarbon group, a substituted or unsubstituted $C_{1-40}$ heterohydrocarbon group, a halogen, or a hydrogen, and

$R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ are independently of one another selected from a substituted or unsubstituted $C_{1-40}$ hydrocarbon group, a substituted or unsubstituted $C_{1-40}$ heterohydrocarbon group, $-Si(R_e)_3$, $-OSi(R_e)_3$, $-Ge(R_e)_3$, $-P(R_e)_2$, $-N(Re)_2$, $-OR_e$, - $SR_e$, $-NO_2$, -CN, $-CF_3$, $-OCF_3$, $-S(O)R_e$, $-S(O)_2R_e$, $-N=C(R_e)_2$, - $OC(O)R_e$, $-C(O)OR_e$, $-N(R)C(O)R_e$, $-C(O)N(R_e)_2$, a halogen, and hydrogen, in which $R_e$ is independently of each other a substituted or unsubstituted $C_{1-30}$ hydrocarbon group or a substituted or unsubstituted $C_{1-30}$ heterohydrocarbon group, but two or more of $R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ may or may not form one or more cyclic structures.

In a specific example of the present invention, the transition metal compound of Chemical Formula 1 may be at least one of transition metal compounds represented by the following Chemical Formulae 1-1 to 1-8, and the transition metal compound of Chemical Formula 2 may be a transition metal compound represented by the following Chemical Formula 2-1:

[Chemical Formula 1-1] [Chemical Formula 1-2]

[Chemical Formula 1-3]

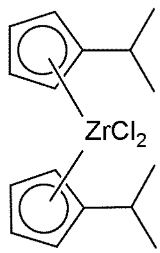
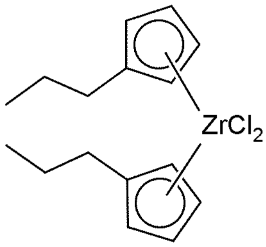
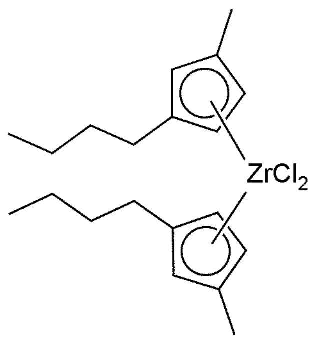

[Chemical Formula 1-4] [Chemical Formula 1-5]

[Chemical Formula 1-6]

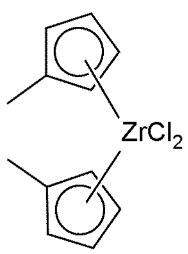
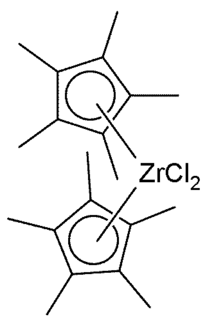
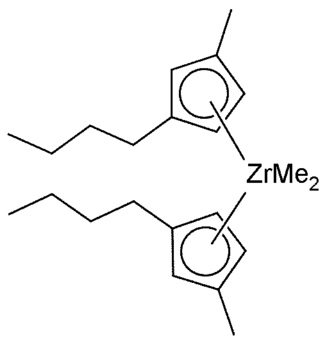

[Chemical Formula 1-7] [Chemical Formula 1-8]

[Chemical Formula 2-1]

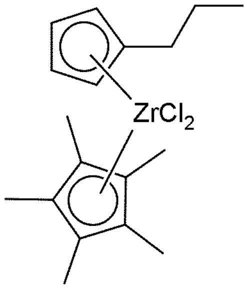
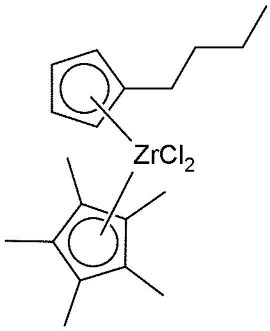
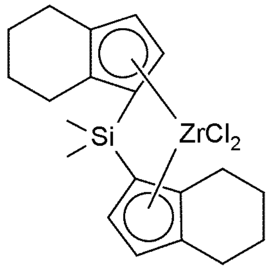

wherein Me is methyl.

In a specific example of the present invention, the transition metal compound of Chemical Formula 3 may be at least one of transition metal compounds represented by the following Chemical Formulae 3-1 to 3-10:

[Chemical Formula 3-1] [Chemical Formula 3-2]

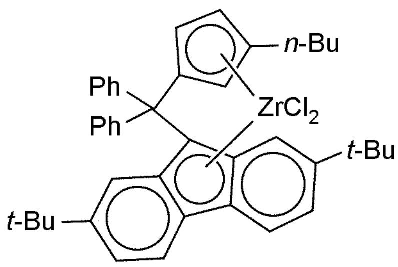
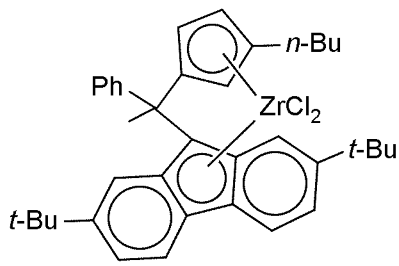

[Chemical Formula 3-3] [Chemical Formula 3-4]

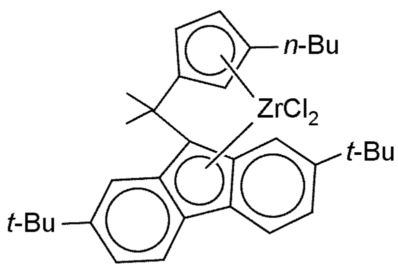
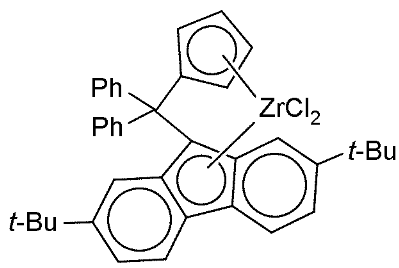

[Chemical Formula 3-5] [Chemical Formula 3-6]

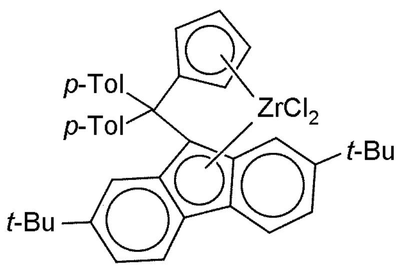
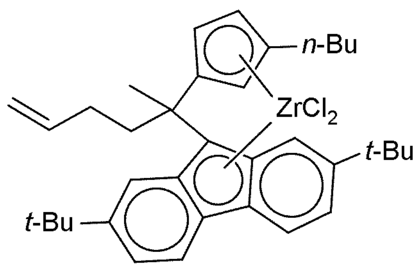

[Chemical Formula 3-7] [Chemical Formula 3-8]

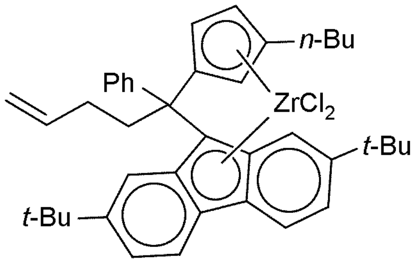
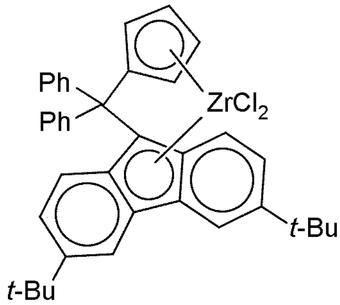

[Chemical Formula 3-9] [Chemical Formula 3-10]

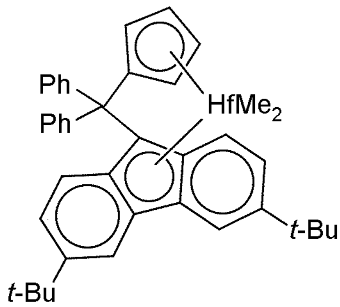
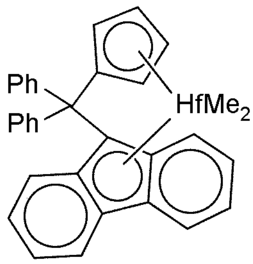

wherein Me is methyl, n-Bu is n-butyl, t-Bu is t-butyl, Ph is phenyl, and p-Tol is p-tolyl.

In a specific example of the present invention, the transition metal compound of Chemical Formula 4 may be at least one of transition metal compounds represented by the following Chemical Formulae 4-1 and 4-2, the transition metal compound of Chemical Formula 5a may be at least one of transition metal compounds represented by the following Chemical Formulae 5-1 to 5-4, and the compound of Chemical Formula 5b may be at least one of transition metal compounds represented by the following Chemical Formulae 5-5 and 5-6:

[Chemical Formula 4-1] [Chemical Formula 4-2]

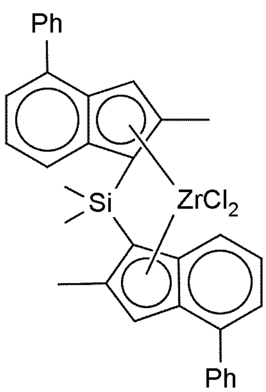
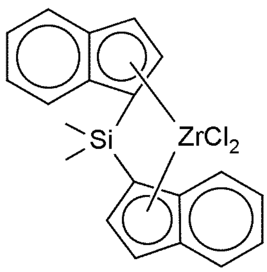

[Chemical Formula 5-1] [Chemical Formula 5-2]

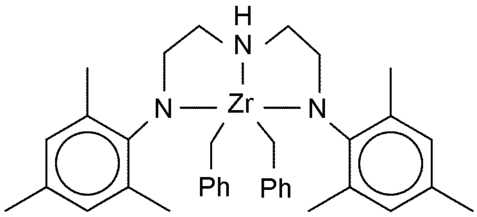
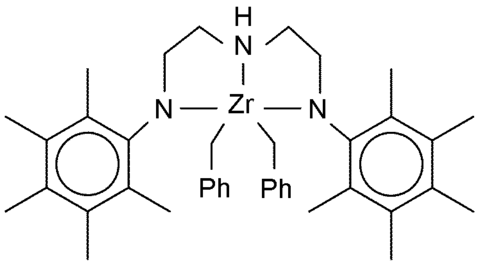

[Chemical Formula 5-3] [Chemical Formula 5-4]

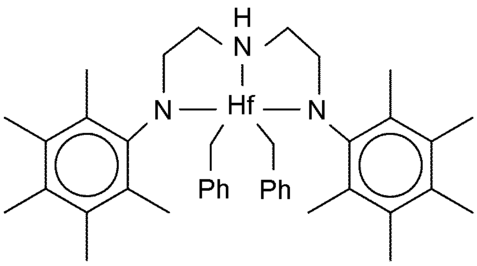
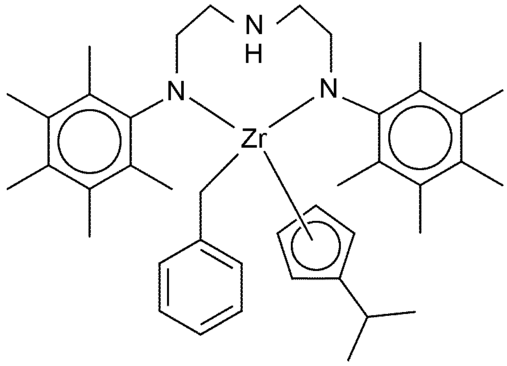

[Chemical Formula 5-5] [Chemical Formula 5-6]

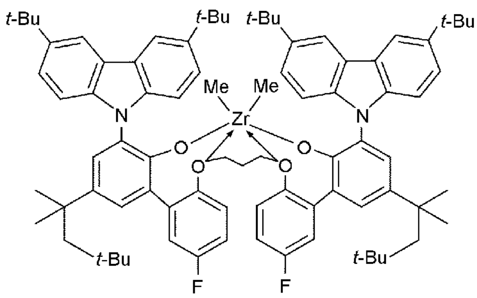
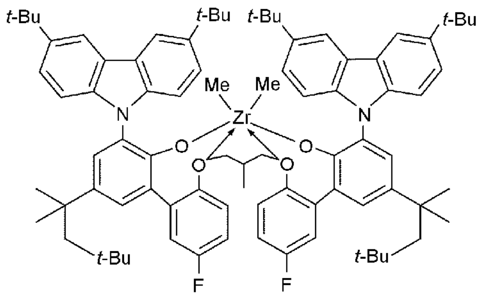

wherein Me is methyl, t-Bu is t-butyl, and Ph is phenyl.

In a specific example of the present invention, the cocatalyst compound may include at least one selected from the group consisting of a compound represented by the following Chemical Formula 6, a compound represented by the following Chemical Formula 7, and a compound represented by Chemical Formula 8:

[Chemical Formula 6]

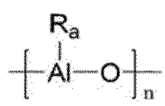

[Chemical Formula 7]

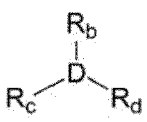

[Chemical Formula 8] $[L\text{-}H]^+[Z(A)_4]^-$ or $[L]^+[Z(A)_4]^-$

wherein n is an integer of 2 or more, and $R_a$ is a halogen atom, a hydrocarbon group having 1 to 20 carbon atoms, or a hydrocarbon group having 1 to 20 carbon atoms substituted by a halogen,
D is aluminum (Al) or boron (B), and $R_b$, $R_c$, and $R_d$ are independently of one another a halogen atom, a hydrocarbon group having 1 to 20 carbon atoms, a hydrocarbon group having 1 to 20 carbon atoms substituted by a halogen, or an alkoxy group having 1 to 20 carbon atoms, and
L is a neutral or cationic Lewis base, $[L\text{-}H]^+$ and $[L]^+$ are a Bronsted acid, Z is a Group 13 element, and A is independently of each other a substituted or unsubstituted aryl group having 6 to 20 carbon atoms or a substituted or unsubstituted alkyl group having 1 to 20 carbon atoms.

In a preferred specific example of the present invention, the compound represented by Chemical Formula 6 may be at least one selected from the group consisting of methylaluminoxane, ethylaluminoxane, isobutylaluminoxane, and butylaluminoxane.

In a preferred specific example of the present invention, the compound represented by Chemical Formula 7 may be at least one selected from the group consisting of trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, and tributylboron.

In a preferred specific example of the present invention, the compound represented by Chemical Formula 8 may be at least one selected from the group consisting of triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(o,p-dimethylphenyl)boron, tributylammonium tetra(p-trifluoromethylphenyl)boron, trimethylammonium tetra(p-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(p-tolyl)aluminum, tripropylammonium tetra(p-tolyl)aluminum, triethylammonium tetra(o,p-dimethylphenyl)aluminum, tributylammonium tetra(p-trifluoromethylphenyl)aluminum, trimethylammonium tetra(p-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(p-tolyl)boron, triethylammonium tetra(*o*,*p*-dimethylphenyl)boron, triphenylcarbonium tetra(*p*-trifluoromethylphenyl)boron, and triphenylcarbonium tetrapentafluorophenylboron.

In a specific example, the hybrid metallocene catalyst may further include a carrier which supports the hybrid transition metal compound, the cocatalyst compound, or both.

In a specific example of the present invention, the carrier may include at least one selected from the group consisting of silica, alumina, and magnesia.

Herein, a total amount of the hybrid transition metal compound supported on the carrier may be 0.001 to 1 mmol based on 1 g of the carrier, and a total amount of the cocatalyst compound supported on the carrier may be 2 to 15 mmol based on 1 g of the carrier.

In another general aspect, a method for preparing an olefin-based polymer includes: polymerizing ethylene and at least one $\alpha$-olefin in the presence of a hybrid metallocene catalyst including: (a) at least one first transition metal compound selected from transition metal compounds represented by the following Chemical Formula 1 and transition metal compounds represented by the following Chemical Formula 2; (b) at least one second transition metal compound selected from transition metal compounds represented by the following Chemical Formula 3; (c) at least one third transition metal compound selected from transition metal compounds represented by the following Chemical Formula 4, transition metal compounds represented by the following Chemical Formula 5a, and transition metal compounds represented by the following Chemical Formula 5b; and (d) a cocatalyst compound, thereby obtaining an olefin-based polymer, wherein the olefin-based polymer has a density of 0.930 to 0.970 g/cm3, a melt index ($I_{2.16}$) measured with a load of 2.16 kg at 190°C of 0.1 to 5.0 g/10 min, a ratio (melt flow ratio; MFR) between a melt index ($I_{21.6}$) measured with a load of 21.6 kg and a melt index ($I_{2.16}$) measured with a load of 2.16 kg at 190°C of 30 to 200, a unimodal molecular weight distribution having a shoulder when measured by gel permeation chromatography (GPC), and a shear rate defined by Equation 1 at which a melt fracture or shark skin is shown when measured with a capillary rheometer, of 500 $sec^{-1}$ or more.

In a specific example of the present invention, the $\alpha$-olefin may be at least one selected from the group consisting

of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene. Preferably, the α-olefin may be 1-hexene.

In a specific example of the present invention, polymerization of ethylene and at least one α-olefin may be performed by gas phase polymerization, and specifically, the polymerization of ethylene and at least one α-olefin may be performed in a gas phase fluidized bed reactor.

[Advantageous Effects]

According to an exemplary embodiment of the present invention, the olefin-based polymer prepared by a hybrid metallocene catalyst has a broad unimodal molecular weight distribution having a shoulder and excellent high-speed processability.

[Description of Drawings]

FIG. 1 is a GPC-FTIR graph for describing a unimodal molecular weight distribution.
FIGS. 2 to 5 are GPC graphs of olefin-based polymers of the examples of the present invention, respectively.
FIGS. 6 and 7 are GPC graphs of olefin-based polymers of the comparative examples of the present invention, respectively.
FIG. 8 is a photograph in which it was observed whether there was a melt fracture or shark skin due to a shear rate of the olefin-based polymer of the example of the present invention.
FIG. 9 is a photograph in which it was observed whether there was a melt fracture or shark skin due to a shear rate of the olefin-based polymer of the comparative example of the present invention.

[Best Mode]

Hereinafter, the present invention will be described in more detail.

**Olefin-based polymer**

According to an exemplary embodiment of the present invention, an olefin-based polymer which has a density of 0.930 to 0.970 g/cm3, a melt index ($I_{2.16}$) measured with a load of 2.16 kg at 190°C of 0.1 to 5.0 g/10 min, and a ratio (melt flow ratio; MFR) between a melt index ($I_{21.6}$) measured with a load of 21.6 kg and a melt index ($I_{2.16}$) measured with a load of 2.16 kg at 190°C of 30 to 200 is provided.

The olefin-based polymer according to an exemplary embodiment of the present invention has a density of 0.930 to 0.970 g/cm$^3$. The density of the olefin-based polymer may be preferably 0.930 to 0.965 g/cm3, more preferably 0.935 to 0.960 g/cm3, and particularly preferably 0.940 to 0.950 g/cm$^3$.

The olefin-based polymer according to an exemplary embodiment of the present invention may have a melt index ($I_{2.16}$) as measured with a load of 2.16 kg at 190°C of 0.1 to 5.0 g/10 min. Preferably, the melt index of the olefin-based polymer measured with a load of 2.16 kg at 190°C may be preferably 0.5 to 4.5 g/10 min, more preferably 0.5 to 4.0 g/10 min, and particularly preferably 0.5 to 2.0 g/10 min.

The olefin-based polymer according to an exemplary embodiment of the present invention may have a ratio (melt flow ratio; MFR) between a melt index ($I_{21.6}$) measured with a load of 21.6 kg and a melt index ($I_{2.16}$) measured with a load of 2.16 kg at 190°C of 30 to 200. Preferably, the MFR of the olefin-based polymer may be preferably 30 to 50, more preferably 40 to 135, and particularly preferably 50 to 120.

The olefin-based polymer according to an exemplary embodiment of the present invention has a unimodal molecular weight distribution when measured by gel permeation chromatography (GPC).

Specifically, referring to FIG. 1 showing a general GPC graph of a polymer, in the GPC graph of the polymer, when a point at which the slope of a tangent line changes from positive to negative (a and c) is referred to as "peak", and a point at which the slope of a tangent line changes from negative to positive (b) is referred to as "valley", the olefin-based polymer according to an exemplary embodiment of the present invention shows a unimodal molecular weight distribution having one peak.

The olefin-based polymer according to an exemplary embodiment of the present invention has a shoulder in the GPC graph, as shown in FIGS. 2 to 5. The shoulder may refer to a section in which the absolute value of the positive slope toward a low molecular weight component (left of the peak) increases and then decreases but does not change to a negative value, or a section in which the absolute value of the negative slope toward a high molecular weight component (right of the peak) decreases and then increases but does not change to a positive value, as the molecular

weight increases in the GPC graph. At this point, this is not classified as a peak as long as the value of the tangent line of the graph does not change from positive to negative or negative to positive.

When the GPC of the olefin-based polymer according to an exemplary embodiment of the present invention is measured, the value of a fraction (vertical axis) to a molecular weight (horizontal axis) is converted into a numerical value and the change in value is checked, thereby confirming the presence of the peak and the number of peaks on the GPC graph.

The olefin-based polymer according to an exemplary embodiment of the present invention has a shear rate defined by the following Equation 1 at which a melt fracture or shark skin is shown when measured with a capillary rheometer of 500 $sec^{-1}$ or more. Preferably, the shear rate at which a melt fracture or shark skin is shown may be 700 $sec^{-1}$ or more, more preferably 750 $sec^{-1}$ or more, 1,050 $sec^{-1}$ or more, or 1,100 $sec^{-1}$ or more.

[Equation 1]

$$\gamma_{ap} = \frac{4V}{\pi R^3}$$

wherein $\gamma_{ap}$ is an apparent shear rate ($sec^{-1}$), V is a volume flow ($mm^3/sec$) produced by a piston, and R is a radius (mm) of a round hole capillary.

A melt fracture or shark skin commonly refers to an occurrence of irregular bumps or shark scales or loss of surface gloss on the surface of the polymer during extrusion of the polymer. As the shear rate at which the melt fracture or shark skin occurs is higher, the processability of the corresponding polymer may be said to be excellent.

The olefin-based polymer according to an exemplary embodiment of the present invention is prepared by polymerization of ethylene and at least one α-olefin.

In a specific example of the present invention, the olefin-based polymer may be prepared by polymerization of ethylene and at least one α-olefin in the presence of a hybrid metallocene catalyst including: (a) at least one first transition metal compound selected from transition metal compounds represented by the following Chemical Formula 1 and transition metal compounds represented by the following Chemical Formula 2; (b) at least one second transition metal compound selected from transition metal compounds represented by the following Chemical Formula 3; (c) at least one third transition metal compound selected from transition metal compounds represented by the following Chemical Formula 4, transition metal compounds represented by the following Chemical Formula 5a, and transition metal compounds represented by the following Chemical Formula 5b; and (d) a cocatalyst compound:

[Chemical Formula 1] [Chemical Formula 2] [Chemical Formula 3]

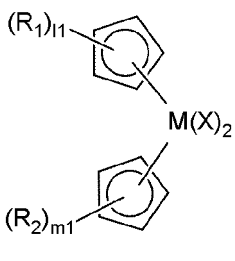

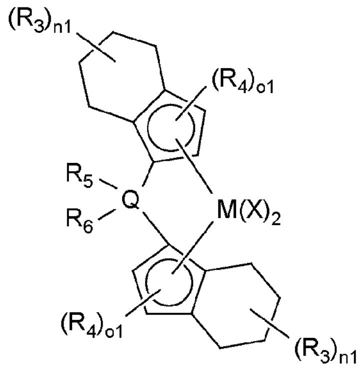

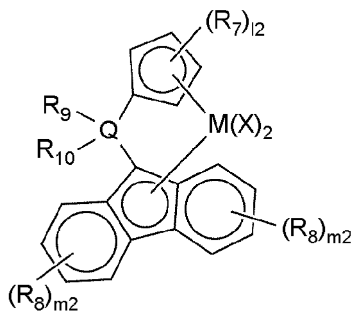

[Chemical Formula 4] [Chemical Formula 5a]

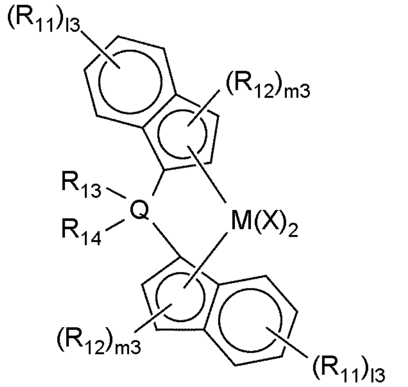

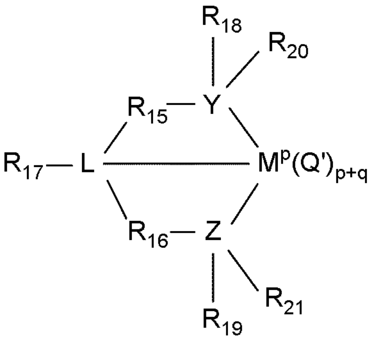

[Chemical Formula 5b]

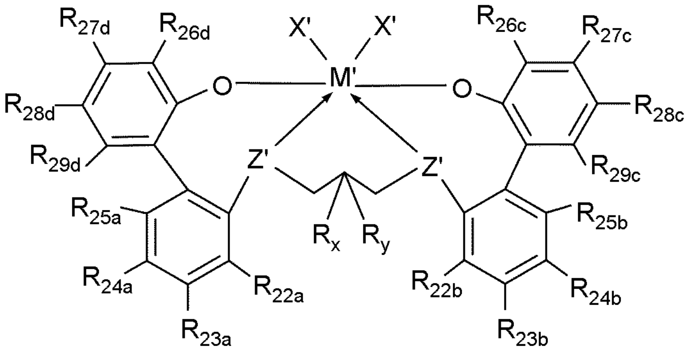

wherein l1 and m1 are independently of each other an integer of 0 to 5. Preferably, l1 is 1, and m1 is independently of each other an integer of 1 to 5,

l2, l3, m2, and n1 are independently of one another an integer of 0 to 4. Preferably, l2, l3, and m2 are 1, respectively, and each n1 is 0.

m3 and o1 are independently of each other an integer of 0 to 2. Preferably, each m3 is 1 and each o1 is 0.

P is an oxidation state of M, and is +3, +4, or +5.

q is a formal charge of a YZL ligand, and is 0, -1, - 2, or -3.

M is a Group 4 transition metal of a periodic table of elements. Specifically, M may be titanium (Ti), zirconium (Zr), or hafnium (Hf), more specifically zirconium or hafnium.

M' is titanium, zirconium, or hafnium, and is in a formal oxidation state of +2, +3, or +4. Specifically, M' may be zirconium or hafnium.

X is independently of each other a halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido. Specifically, X may be independently of each other halogen or $C_{1-20}$ alkyl, more specifically chlorine (Cl) or methyl.

X' is independently of each other alkyl. Specifically, X' is independently of each other methyl.

Q is independently of each other carbon (C), silicon (Si), germanium (Ge), or tin (Sn). Specifically, Q is independently of each other carbon (C) or silicon (Si).

Q' is an anionic leaving group and is independently of each other hydrogen, a substituted or unsubstituted $C_{1-40}$ hydrocarbon group, a substituted or unsubstituted $C_{1-40}$ heterohydrocarbon group, a heteroatom, or a halogen. Specifically, Q' may be a linear or branched alkyl group, an alkeny group, an alkynyl group, a cycloalkyl group, an aryl group, an alkylaryl group, an arylalkyl group, an acyl group, an aroyl group, an alkoxy group, an aryloxy group, an alkylthio group, a dialkylamino group, an alkoxycarbonyl group, an aryloxycarbonyl group, a carbamoyl group, an alkyl- or dialkylcarbamoyl group, an acyloxy group, an acylamino group, an aroylamino group, a linear, branched, or cyclic alkylene group, or a combination thereof.

L is a Group 15 or Group 16 element, and preferably nitrogen.

Y is a Group 15 element, preferably nitrogen or phosphorus, and more preferably nitrogen.

Z is a Group 15 element, preferably nitrogen or phosphorus, and more preferably nitrogen.

Z' is independently of each other -O-, -S-, -N($C_{1-40}$ hydrocarbon group)- or -P($C_{1-40}$ hydrocarbon group)-. Specifically, Z' may be independently of each other -O-.

$R_1$ to $R_4$, $R_7$, $R_8$, $R_{11}$, and $R_{12}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but these may or may not be independently of each other connected to an adjacent group to form a substituted or unsubstituted, saturated or unsaturated $C_{4-20}$ ring. Specifically, $R_1$ to $R_4$, $R_7$, $R_8$, $R_{11}$, $R_{12}$ may be independently of one another substituted or unsubstituted $C_{1-20}$ alkyl or substituted or unsubstituted $C_{6-20}$ aryl.

$R_5$, $R_6$, $R_9$, $R_{10}$, $R_{13}$, and $R_{14}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but $R_5$ and $R_6$, $R_9$ and $R_{10}$, $R_{13}$ and $R_{14}$ may or may not be independently of one another connected to each other to form a substituted or unsubstituted, saturated or unsaturated $C_{2-20}$ ring. Specifically, $R_5$, $R_6$, $R_9$, $R_{10}$, $R_{13}$, and $R_{14}$ may be independently of one another substituted or unsubstituted $C_{1-20}$ alkyl, substituted or unsubstituted $C_{2-20}$ alkenyl, or substituted or unsubstituted $C_{6-20}$ aryl.

$R_{15}$ and $R_{16}$ are independently of each other a $C_{1-20}$ hydrocarbon group or a heteroatom-containing group, in which the heteroatom is silicon, germanium, tin, lead, or phosphorus, or $R_{15}$ and $R_{16}$ may be connected to each other. Specifically, $R_{15}$ and $R_{16}$ may be independently of each other a $C_{1-6}$ hydrocarbon group.

$R_{17}$ does not exist, or is hydrogen, $C_{1-20}$ alkyl, a halogen, or a heteroatom-containing group. Specifically, $R_{17}$ may be hydrogen or methyl.

$R_{18}$ and $R_{19}$ are independently of each other an alkyl group, an aryl group, a substituted aryl group, a cyclic alkyl group, a substituted cyclic alkyl group, or a polycyclic system. Specifically, $R_{18}$ and $R_{19}$ may be independently of each other a substituted aryl group.

$R_{20}$ and $R_{21}$ independently of each other do not exist, or may be hydrogen, an alkyl group, a halogen, a heteroatom, a hydrocarbon group, or a heteroatom-containing group.

$R_x$ and $R_y$ are independently of each other a substituted or unsubstituted $C_{1-40}$ hydrocarbon group, a substituted or unsubstituted $C_{1-40}$ heterohydrocarbon group, a halogen, or hydrogen. $R_x$ and $R_y$ may be independently of each other methyl or hydrogen.

$R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ are independently of one another selected from a substituted or unsubstituted $C_{1-40}$ hydrocarbon group, a substituted or unsubstituted $C_{1-40}$ heterohydrocarbon group, $-Si(R_e)_3$, $-OSi(R_e)_3$, $-Ge(R_e)_3$, $-P(R_e)_2$, $-N(R_e)_2$, $-OR_e$, - $SR_e$, $-NO_2$, -CN, $-CF_3$, $-OCF_3$, $-S(O)R_e$, $-S(O)_2R_e$, $-N=C(R_e)_2$, - $OC(O)R_e$, $-C(O)OR_e$, $-N(R)C(O)R_e$, $-C(O)N(Re)_2$, a halogen, and hydrogen, in which $R_e$ is independently of each other a substituted or unsubstituted $C_{1-30}$ hydrocarbon group or a substituted or unsubstituted $C_{1-30}$ heterohydrocarbon group, but two or more of $R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ may or may not form one or more cyclic structures.

In the hybrid metallocene catalyst for olefin polymerization according to an exemplary embodiment of the present invention, contents of the first transition metal compound, the second transition metal compound, and the third transition metal compound may be determined depending on the activity of each catalyst. Preferably, each of the first transition metal compound, the second transition metal compound, and the third transition metal compound may be contained at 10 wt% or more, based on the total amount of the transition metal compound in the hybrid metallocene catalyst for olefin polymerization.

In a specific example of the present invention, the transition metal compound of Chemical Formula 1 may be at least one of transition metal compounds represented by the following Chemical Formulae 1-1 to 1-8, and the transition metal compound of Chemical Formula 2 may be a transition metal compound represented by the following Chemical Formula 2-1:

[Chemical Formula 1-1] [Chemical Formula 1-2]

[Chemical Formula 1-3]

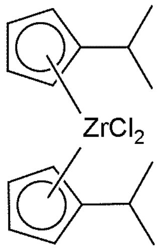

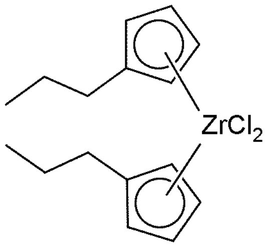

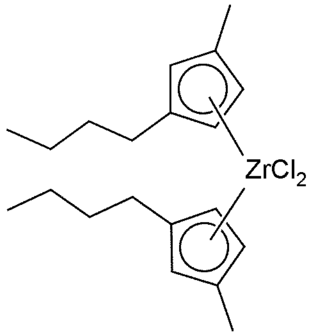

[Chemical Formula 1-4] [Chemical Formula 1-5]

[Chemical Formula 1-6]

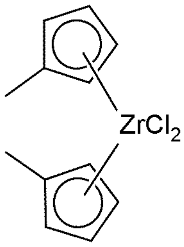

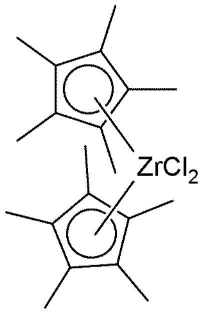

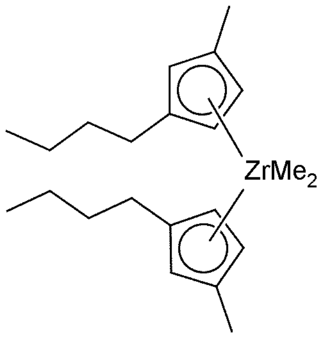

[Chemical Formula 1-7] [Chemical Formula 1-8]

[Chemical Formula 2-1]

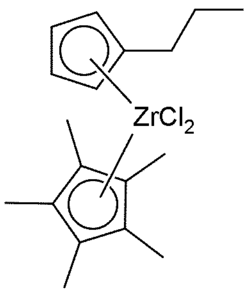

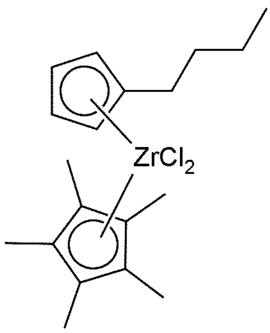

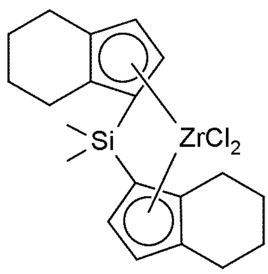

wherein Me is methyl.

In a specific example of the present invention, the transition metal compound of Chemical Formula 3 may be at least one of transition metal compounds represented by the following Chemical Formulae 3-1 to 3-10:

[Chemical Formula 3-1] [Chemical Formula 3-2]

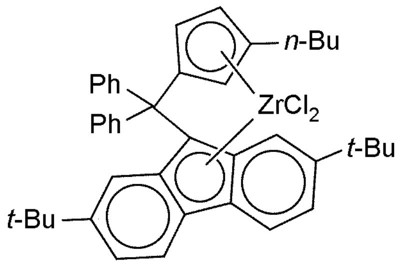

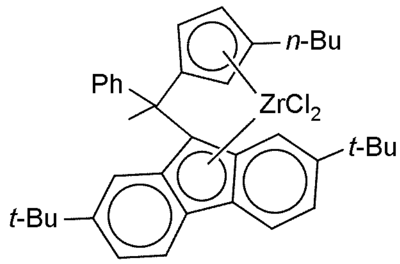

[Chemical Formula 3-3] [Chemical Formula 3-4]

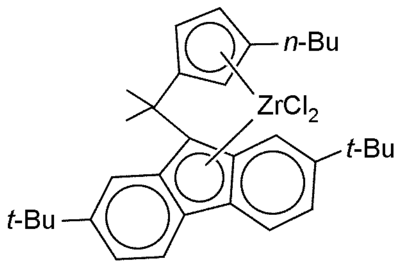

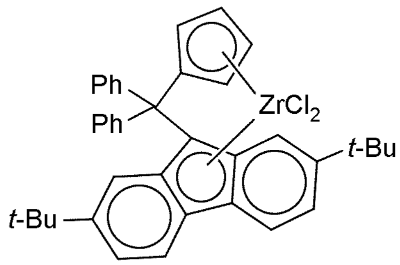

[Chemical Formula 3-5] [Chemical Formula 3-6]

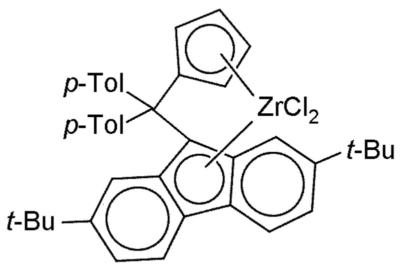

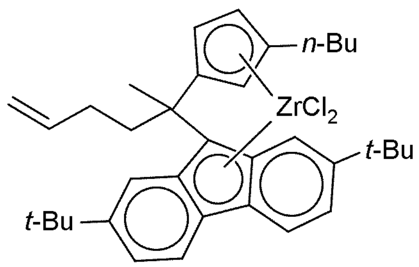

[Chemical Formula 3-7] [Chemical Formula 3-8]

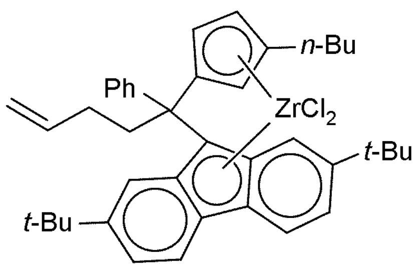

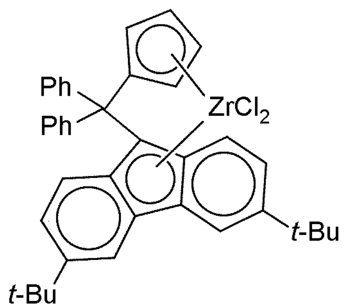

[Chemical Formula 3-9] [Chemical Formula 3-10]

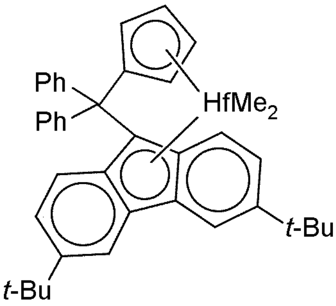

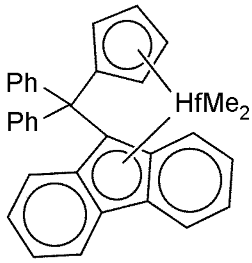

wherein Me is methyl, *n*-Bu is *n*-butyl, *t*-Bu is *t*-butyl, Ph is phenyl, and *p*-Tol is *p*-tolyl.

In a specific example of the present invention, the transition metal compound of Chemical Formula 4 may be at least one of transition metal compounds represented by the following Chemical Formulae 4-1 and 4-2, the transition metal compound of Chemical Formula 5a may be at least one of transition metal compounds represented by the following Chemical Formulae 5-1 to 5-4, and the compound of Chemical Formula 5b may be at least one of transition metal compounds represented by the following Chemical Formulae 5-5 and 5-6:

[Chemical Formula 4-1] [Chemical Formula 4-2]

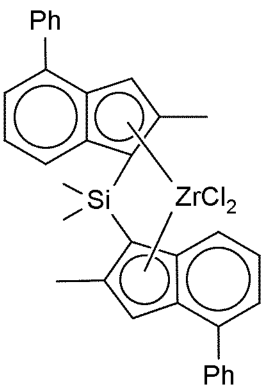

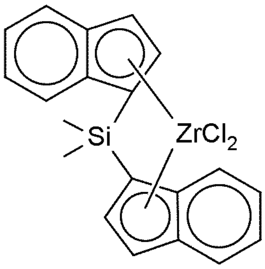

[Chemical Formula 5-1] [Chemical Formula 5-2]

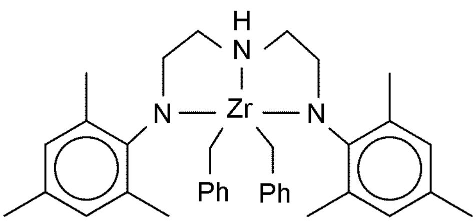

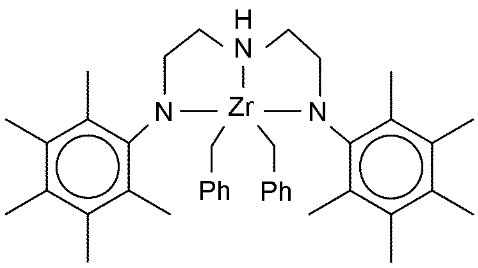

[Chemical Formula 5-3] [Chemical Formula 5-4]

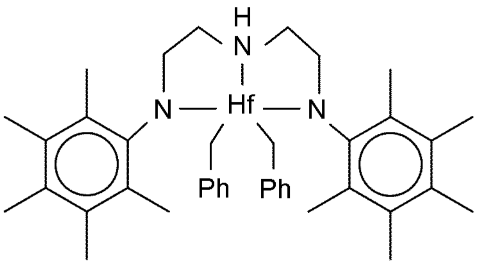

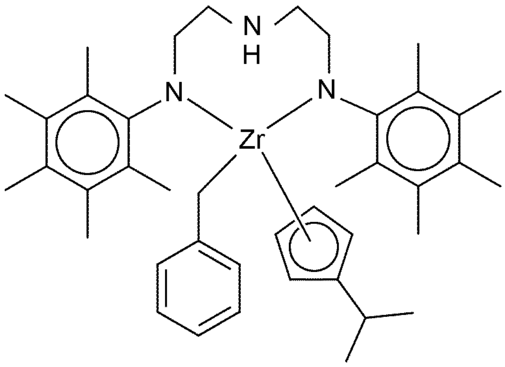

[Chemical Formula 5-5] [Chemical Formula 5-6]

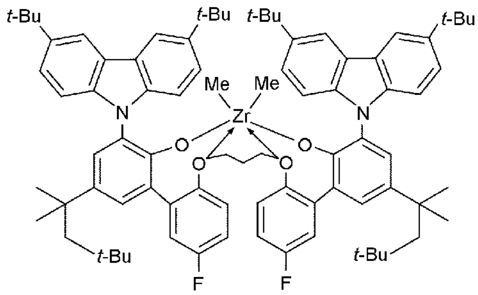

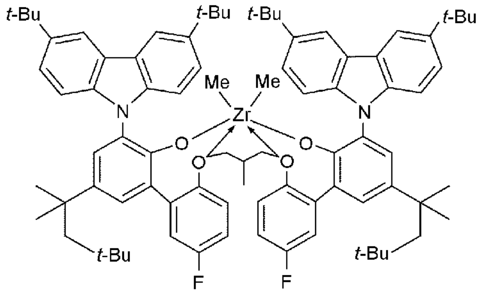

wherein Me is methyl, t-Bu is t-butyl, and Ph is phenyl.

In a specific example of the present invention, the cocatalyst compound may include at least one selected from the group consisting of a compound represented by the following Chemical Formula 6, a compound represented by the following Chemical Formula 7, and a compound represented by Chemical Formula 8:

[Chemical Formula 6]

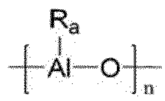

wherein n is an integer of 2 or more, and $R_a$ is a halogen atom, a hydrocarbon having 1 to 20 carbon atoms, or a hydrocarbon having 1 to 20 carbon atoms substituted by a halogen. Specifically, $R_a$ may be methyl, ethyl, *n*-butyl, or isobutyl.

[Chemical Formula 7]

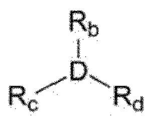

wherein D is aluminum (Al) or boron (B), and $R_b$, $R_c$, and $R_d$ are independently of one another a halogen atom, a hydrocarbon group having 1 to 20 carbon atoms, a hydrocarbon group having 1 to 20 carbon atoms substituted by a halogen, or an alkoxy group having 1 to 20 carbon atoms. Specifically, when D is aluminum (Al), $R_b$, $R_c$, and $R_d$ may be independently of one another methyl or isobutyl, and when D is boron (B), $R_b$, $R_c$, and $R_d$ may be pentafluorophenyl, respectively.

[Chemical Formula 8] $[L-H]^+[Z(A)_4]^-$ or $[L]^+[Z(A)_4]^-$

wherein L is a neutral or cationic Lewis base, $[L-H]^+$ and $[L]^+$ are a Bronsted acid, Z is a Group 13 element, and A is independently of each other a substituted or unsubstituted aryl group having 6 to 20 carbon atoms or a substituted or unsubstituted alkyl group having 1 to 20 carbon atoms. Specifically, $[L-H]^+$ may be dimethylanilinium cation, $[Z(A)_4]^-$ may be $[B(C_6F_5)_4]^-$, and $[L]^+$ may be $[(C_6H_5)_3C]^+$.

An example of the compound represented by Chemical Formula 6 may include methylaluminoxane, ethylaluminoxane, isobutylaluminoxane, butylaluminoxane, and the like, and is preferably methylaluminoxane, but is not limited thereto.

An example of the compound represented by Chemical Formula 7 includes trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-p-tolylaluminum, dimethylaluminummethoxide, dimethylaluminumethoxide, trimethylboron, triethylboron, triisobutylboron, tripropylboron, tributylboron, and the like, and is preferably trimethylaluminum, triethylaluminum, and triisobutylaluminum, but is not limited thereto.

An example of the compound represented by Chemical Formula 8 may include triethylammonium tetraphenylboron, tributylammonium tetraphenylboron, trimethylammonium tetraphenylboron, tripropylammonium tetraphenylboron, trimethylammonium tetra(*p*-tolyl)boron, trimethylammonium tetra(*o*,*p*-dimethylphenyl)boron, tributylammonium tetra(*p*-trifluoromethylphenyl)boron, trimethylammonium tetra(*p*-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(*p*-tolyl)aluminum, tripropylammonium tetra(*p*-tolyl)aluminum, triethylammonium tetra(*o*,*p*-dimethylphenyl)aluminum, tributylammonium tetra(*p*-trifluoromethylphenyl)aluminum, trimethylammonium tetra(*p*-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(p-tolyl)boron, triethylammonium tetra(*o*,*p*-dimethylphenyl)boron, triphenylcarbonium tetra(*p*-trifluoromethylphenyl)boron, triphenylcarbonium tetrapentafluorophenylboron, and the like.

In a specific example, the hybrid metallocene catalyst for olefin polymerization may further include a carrier which supports the hybrid transition metal compound, the cocatalyst compound, or both.

Herein, the carrier may include a material containing a hydroxyl group on the surface, and preferably, may use a material having highly reactive hydroxyl and siloxane groups, which is dried to remove moisture from the surface. For example, the carrier may include at least one selected from the group consisting of silica, alumina, and magnesia. Specifically, silica, silica-alumina, silica-magnesia, and the like which are dried at a high temperature may be used as the carrier, and these may usually contain oxide, carbonate, sulfate, and nitrate components such as $Na_2O$, $K_2CO_3$, $BaSO_4$, and $Mg(NO_3)_2$. In addition, these may include carbon, zeolite, magnesium chloride, and the like. However, the carrier is not particularly limited thereto.

The carrier may have an average particle size of 10 to 250 um, preferably 10 to 150 $\mu$m, and more preferably 20 to 100 $\mu$m.

The carrier may have a micropore volume of 0.1 to 10 ml/g, preferably 0.5 to 5 ml/g, and more preferably 1.0 to 3.0 ml/g.

The carrier may have a specific surface area of 1 to 1,000 $m^2$/g, preferably 100 to 800 $m^2$/g, and more preferably 200 to 600 $m^2$/g.

In a preferred example, when the carrier is silica, a drying temperature of silica may be 200 to 900°C. The drying temperature may be preferably 300 to 800°C, and more preferably 400 to 700°C. When the drying temperature is lower than 200°C, silica has too much moisture so that the moisture on the surface reacts with a first cocatalyst compound, and when the drying temperature is higher than 900°C, the structure of the carrier may collapse.

A concentration of a hydroxyl group in dried silica may be 0.1 to 5 mmol/g, preferably 0.7 to 4 mmol/g, and more preferably 1.0 to 2 mmol/g. When the concentration of the hydroxyl group is less than 0.1 mmol/g, the supported amount of the cocatalyst is lowered, and when the concentration is more than 5 mmol/g, the catalyst component becomes inactive.

The total amount of the hybrid transition metal compound supported on the carrier may be 0.001 to 1 mmol based on 1 g of the carrier. When a ratio between the hybrid transition metal compound and the carrier satisfies the above range, appropriate supported catalyst activity is shown, which is advantageous in terms of the activity maintenance and economic feasibility of a catalyst.

The total amount of the cocatalyst compound supported on the carrier may be 2 to 15 mmol based on 1 g of

the carrier. When the ratio of the cocatalyst compound and the carrier satisfies the above range, it is advantageous in terms of the activity maintenance and economic feasibility of a catalyst.

One or two or more carriers may be used. For example, both the hybrid transition metal compound and the cocatalyst compound may be supported on one carrier, and each of the hybrid transition metal compound and the cocatalyst compound may be supported on two or more carriers. In addition, only one of the hybrid transition metal compound and the cocatalyst compound may be supported on the carrier.

In a specific example of the present invention, the olefin-based polymer may be a homopolymer of an olefin-based monomer or a copolymer of olefin-based monomer and comonomer. Preferably, the olefin-based polymer is a copolymer of an olefin-based monomer and an olefin-based comonomer.

Herein, the olefin-based monomer is at least one selected from the group consisting of $C_{2-20}$ $\alpha$-olefin, $C_{1-20}$ diolefin, $C_{3-20}$ cycloolefin, and $C_{3-20}$ cyclodiolefin.

For example, the olefin-based monomer may be ethylene, propylene, 1-butene, 1-pentene, 4-methyl-1-pentene, 1-hexene, 1-heptene, 1-octene, 1-decene, 1-undecene, 1-dodecene, 1-tetradecene, 1-hexadecene, or the like and the olefin-based polymer may be a homopolymer including only one of the olefin-based monomers exemplified above or a copolymer including two or more thereof.

In an exemplary embodiment, the olefin-based polymer may be a copolymer of ethylene and $C_{3-20}$ $\alpha$-olefin. Preferably, the olefin-based polymer may be a linear low-density polyethylene in which the olefin-based monomer is ethylene and the olefin-based comonomer is 1-hexene.

In this case, the content of ethylene is preferably 55 to 99.9 wt%, and more preferably 90 to 99.9 wt%. The content of the $\alpha$-olefin-based comonomer is preferably 0.1 to 45 wt%, and more preferably 0.1 to 10 wt%.

**Method for preparing olefin-based polymer**

According to an exemplary embodiment of the present invention, a method for preparing an olefin-based polymer including: polymerizing ethylene and at least one $\alpha$-olefin in the presence of a hybrid metallocene catalyst including: (a) at least one first transition metal compound selected from transition metal compounds represented by the following Chemical Formula 1 and transition metal compounds represented by the following Chemical Formula 2; (b) at least one second transition metal compound selected from transition metal compounds represented by the following Chemical Formula 3; (c) at least one third transition metal compound selected from transition metal compounds represented by the following Chemical Formula 4, transition metal compounds represented by the following Chemical Formula 5a, and transition metal compounds represented by the following Chemical Formula 5b; and (d) a cocatalyst compound is provided:

[Chemical Formula 1] [Chemical Formula 2] [Chemical Formula 3]

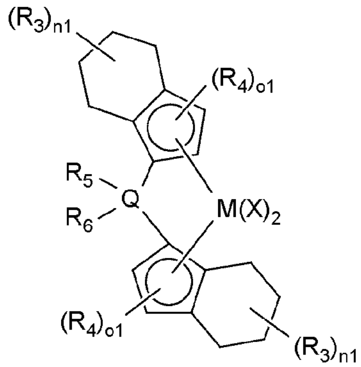

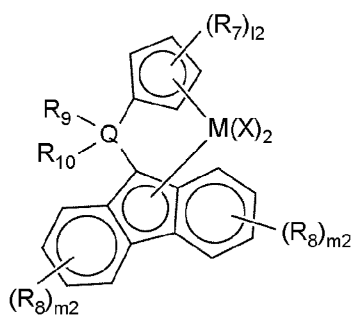

[Chemical Formula 4] [Chemical Formula 5a]

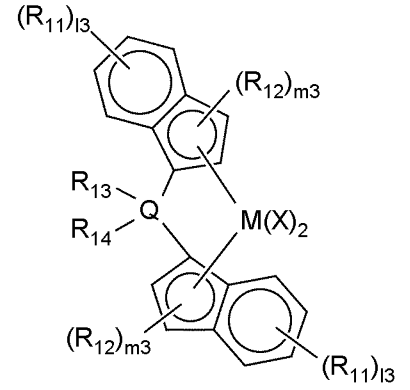

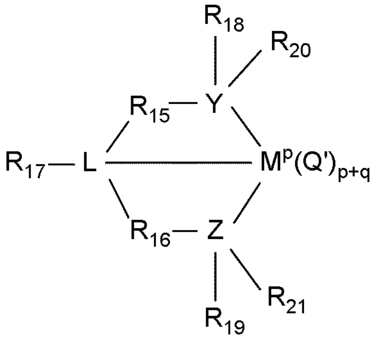

[Chemical Formula 5b]

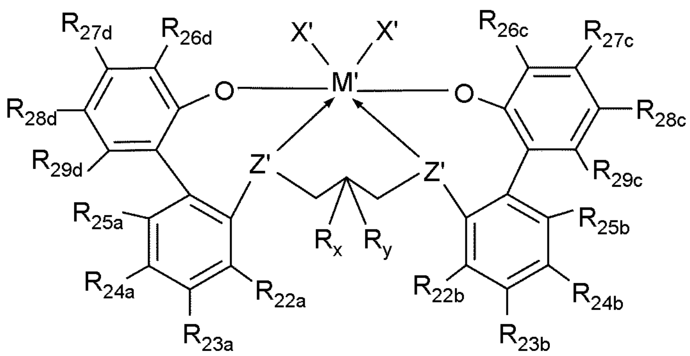

wherein l1, l2, l3, m1, m2, m3, n1, o1, p, q, M, M', X, X', Q, Q', L, Y, Z, Z', $R_1$ to $R_{21}$, $R_x$, $R_y$, $R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ are as defined in the above description of the olefin-based polymer.

As described above, the olefin-based polymer prepared by the preparation method according to an exemplary embodiment of the present invention has a density of 0.930 to 0.970 g/cm$^3$, preferably 0.935 to 0.965 g/cm$^3$, more preferably 0.935 to 0.960 g/cm$^3$, and particularly preferably 0.940-0.950 g/cm$^3$, a melt index ($I_{2.16}$) measured with a load of 2.16 kg at 190°C of 0.1 to 5.0 g/10 min, preferably 0.5 to 4.5 g/10 min, more preferably 0.5 to 4.0 g/10 min, and particularly preferably 0.5 to 2.0 g/10 min, a ratio (melt flow ratio; MFR) between a melt index ($I_{21.6}$) measured with a load of 21.6 kg and a melt index ($I_{2.16}$) measured with a load of 2.16 kg at 190°C of 30 to 200, preferably 30 to 150, more preferably 40 to 135, and particularly preferably 50 to 120, a unimodal molecular weight distribution having a shoulder when measured by gel permeation chromatography (GPC), and has a shear rate defined by the following Equation 1 at which a melt fracture or shark skin is shown when measured with a capillary rheometer, of 500 sec$^{-1}$ or more, preferably 700 sec$^{-1}$ or more, more preferably 750 sec$^{-1}$ or more, 1,050 sec$^{-1}$ or more, or 1,100 sec$^{-1}$ or more.

[Equation 1]

$$\gamma_{ap} = \frac{4V}{\pi R^3}$$

wherein $\gamma_{ap'}$, V, and R are as defined in the above description of the olefin-based polymer.

In an illustrative example of the present invention, the olefin-based polymer may be polymerized by a polymerization reaction such as free radical, cationic, coordination, condensation, and addition polymerization, but is not limited thereto.

In an exemplary embodiment of the present invention, the olefin-based polymer may be produced by a gas phase polymerization method, a solution polymerization method, a slurry polymerization method, or the like. Preferably, the polymerization of the olefin-based monomer may be gas phase polymerization, and specifically, the polymerization of the olefin-based monomer may be performed in a gas phase fluidized bed reactor.

When the olefin-based polymer is prepared by a solution polymerization method or a slurry polymerization method, an example of the solvent to be used may include a $C_{5-12}$ aliphatic hydrocarbon solvent such as pentane, hexane, heptane, nonane, decane, and isomers thereof; an aromatic hydrocarbon solvent such as toluene and benzene; a hydrocarbon solvent substituted by a chlorine atom such as dichloromethane and chlorobenzene; and a mixture thereof, but is not limited thereto.

[Best Mode for Carrying out the Invention]

## Examples

Hereinafter, the present invention will be described in more detail through the examples and the comparative examples. However, the following examples are only illustrative of the present invention, and do not limit the scope of the present invention.

Preparation Example 1

1.7 g of the transition metal compound of Chemical Formula 1-1, 0.76 g of the transition metal compound of Chemical Formula 3-1, and 3.5 g of the transition metal compound of Chemical Formula 5-2 were mixed with 951.2 g of a toluene solution of 10 wt% of methylaluminoxane (MAO) (Al/Zr = 150) in a glove box and stirred at room temperature for 1 hour. Meanwhile, 230 g of silica (XP2402) was added to a reactor, and 1,000 ml of purified toluene was added and mixed. A solution of the transition metal compound was injected into the obtained silica slurry and stirring was performed for 3 hours in an oil bath at 75°C. After completion of supporting and sufficient separation of solid/liquid, a supernatant was removed. The supporting catalyst was washed 3 times using toluene, and drying was performed in vacuum at 30°C for 10 hours to obtain 320 g of a hybrid supported catalyst in a free flow powder form.

Preparation Example 2

1.4 g of the transition metal compound of Chemical Formula 1-1, 0.63 g of the transition metal compound of Chemical Formula 3-1, and 2.72 g of the transition metal compound of Chemical Formula 4-1 were mixed with 825 g of a toluene solution of 10 wt% of methylaluminoxane (MAO) in a glove box and stirred at room temperature for 1 hour. Meanwhile, 200 g of silica (XP2402) was added to a reactor, and 1,000 ml of purified toluene was added and mixed. A solution of the transition metal compound was injected into the obtained silica slurry and stirring was performed for 3 hours in an oil bath at 75°C. After completion of supporting and sufficient complete separation of solid/liquid, a supernatant was removed. The supporting catalyst was washed 3 times using toluene, and drying was performed in vacuum at 60°C for 10 hours to obtain 280 g of a hybrid supported catalyst in a free flow powder form.

Preparation Example 3

280 g of a hybrid supported catalyst in a free flow powder form was obtained in the same manner as in Preparation Example 2, except that 1.4 g of the transition metal compound of Chemical Formula 1-1, 1.25 g of the transition metal compound of Chemical Formula 3-1, and 2.2 g of the transition metal compound of Chemical Formula 4-1 were used.

Preparation Example 4

280 g of a hybrid supported catalyst in a free flow powder form was obtained in the same manner as in Preparation Example 2, except that 1.3 g of the transition metal compound of Chemical Formula 2-1, 0.63 g of the transition metal compound of Chemical Formula 3-1, 2.72 g of the transition metal compound of Chemical Formula 4-1, and 824 g of a toluene solution of 10 wt% of methylaluminoxane (MAO) were used.

Preparation Example 5

280 g of a hybrid supported catalyst in a free flow powder form was obtained in the same manner as in Preparation Example 1, except that 1.4 g of the transition metal compound of Chemical Formula 1-1, 0.63 g of the transition metal compound of Chemical Formula 3-1, and 2.72 g of the transition metal compound of Chemical Formula 5-2 were used.

Example

Ethylene and 1-hexene were copolymerized in a continuous fluidized bed gas phase reactor, using each supported catalyst obtained in the above exemplary embodiments. Hydrogen was added for adjusting the molecular weight of the polymer. Polymerization conditions are summarized in the following Table 1: For comparison, a 8380 resin (Hanwha Solutions) prepared with a non-metallocene catalyst was used as Comparative Example 2.

[Table 1]

| Classification | Example 1 | Example 2 | Example 3 | Example 4 | Comparative Example 1 |
|---|---|---|---|---|---|
| Catalyst | Preparation Example 1 | Preparation Example 2 | Preparation Example 3 | Preparation Example 4 | Preparation Example 5 |
| Polymerization temperature (°C) | 89.73 | 89.79 | 90.32 | 90.24 | 89.25 |
| Catalyst injection amount (g/h) | 2.41 | 2.06 | 1.91 | 3.75 | 1.70 |
| Hydrogen injection amount (g/h) | 4.23 | 7.51 | 10.60 | 11.79 | 7.38 |
| 1-Hexene injection amount (kg/h) | 200.1 | 205.6 | 403.3 | 273.8 | 109.0 |
| Hydrogen/ethylene concentration ratio (%) | 0.08 | 0.11 | 0.21 | 0.29 | 0.10 |
| 1-Hexene/ethylene concentration ratio (%) | 0.75 | 0.79 | 1.04 | 0.80 | 0.59 |

Test Example

Physical properties of the olefin-based polymers prepared using each supported catalyst obtained in the examples and the comparative examples were measured as follows. The measurement results are shown in the following Tables 2 and 3.

(1) Melt flow ratio (MFR)

Each melt index was measured with a load of 21.6 kg and a load of 2.16 kg at 190°C in accordance with ASTM D 1238, and the ratio ($MI_{21.6}/MI_{2.16}$) was calculated.

(2) Density

Density was measured according to ASTM D 1505.

(3) Gel transmission chromatography

Gel permeation chromatography-FTIR (GPC-FTIR) of model name GPC-6 available from Polymer Char was used. The measurement was performed at a temperature of 160°C, and trichlorobenzene was used as a solvent. The measurement results of Examples 1 to 4 and Comparative Examples 1 and 2 are sequentially shown in FIGS. 2 to 7.

(4) Shear rate

Shear rate was measured using a Gottfert RG25 capillary rheometer. Measurement conditions were a round hole, a length of 20 mm, an effective length of 20 mm, diameter/width of 2, a height of 0 mm, a run angle of 180°C, and at 230°C, a piston diameter of 15 mm and a capillary diameter of 2 mm. Measurement was performed based on a shear rate at which shark skin or a melt fracture occurred, and the shear rate was calculated from the above Equation 1. It was observed on the polymers of Examples 1 to 4 and Comparative Examples 1 and 2 whether the shark skin or the melt fracture occurred depending on the shear rate, and the results are shown in FIGS. 8 and 9.

[Table 2]

| Classification | Example 1 | Example 2 | Example 3 | Example 4 | Comparative Example 1 | Comparative Example 2 |
|---|---|---|---|---|---|---|
| $I_{2.16}$ (g/10 min) | 0.60 | 0.78 | 0.73 | 0.62 | 0.18 | 0.74 |
| $I_{21.6}$ (g/10 min) | 66.2 | 65.7 | 70.8 | 41.9 | 18.3 | 48.5 |
| MFR ($I_{2.16}/I_{21.6}$) | 110 | 84 | 97 | 68 | 102 | 65 |
| Density (kg/m$^3$ ) | 0.948 | 0.946 | 0.946 | 0.946 | 0.951 | 0.945 |

[Table 3]

| | CFC(GPC-IR) | | | Shear rate (1/sec) |
|---|---|---|---|---|
| | Mn (g/mol) | Mw (g/mol) | PDI | |
| Example 1 | 12,067 | 150,835 | 12.5 | 2,250 |
| Example 2 | 10,019 | 121,815 | 12.2 | 1,750 |
| Example 3 | 6,208 | 116,840 | 18.8 | 750 |
| Example 4 | 6, 123 | 121,565 | 19.9 | 1,250 |
| Comparative Example 1 | 5,575 | 192,959 | 34.6 | 250 |
| Comparative Example 2 | 8,365 | 105,050 | 12.6 | 1,000 |

As confirmed from Tables 2 and 3 and FIGS. 2 to 9, the olefin-based polymer of the example belonging to the scope of the present invention (FIGS. 2 to 5 and FIG. 8) having a broad unimodal molecular weight distribution having a shoulder had excellent high-speed processability due to its high shear rate at which a melt fracture or shark skin were shown. However, the olefin-based polymer of Comparative Example 1 (FIGS. 6 and 9) having a bimodal molecular weight distribution had not-good high-speed processability since a melt fracture occurred at a low shear rate. In addition, the olefin-based polymer of the example showed high-speed processability similar to or better than a commercial product (Comparative Example 2; FIGS. 7 and 9).

[Industrial Applicability]

According to an exemplary embodiment of the present invention, the olefin-based polymer prepared by a hybrid metallocene catalyst has a broad unimodal molecular weight distribution having a shoulder and excellent high-speed processability.

## Claims

1. An olefin-based polymer which has a density of 0.930 to 0.970 g/cm3, a melt index ($I_{2.16}$) measured with a load of 2.16 kg at 190°C of 0.1 to 5.0 g/10 min, a ratio (melt flow ratio; MFR) between a melt index ($I_{21.6}$) measured with a load of 21.6 kg and a melt index ($I_{2.16}$) measured with a load of 2.16 kg at 190°C of 30 to 200, a unimodal molecular weight distribution having a shoulder when measured by gel permeation chromatography (GPC), and a shear rate defined by the following Equation 1 at which a melt fracture or shark skin is shown when measured with a capillary rheometer, of 500 sec$^{-1}$ or more:

[Equation 1]

$$\gamma_{ap} = \frac{4V}{\pi R^3}$$

wherein $\gamma_{ap}$ is an apparent shear rate ($sec^{-1}$), V is a volume flow ($mm^3/sec$) produced by a piston, and R is a radius (mm) of a round hole capillary.

**2.** The olefin-based polymer of claim 1, wherein the olefin-based polymer has the density of 0.930 to 0.965 g/cm3, the melt index ($I_{2.16}$) measured with a load of 2.16 kg at 190°C of 0.5 to 4.5 g/10 min, the ratio (MFR) between the melt index ($I_{21.6}$) measured with a load of 21.6 kg and the melt index ($I_{2.16}$) measured with a load of 2.16 kg at 190°C of 30 to 150, and the shear rate at which a melt fracture or shark skin is shown when measured with a capillary rheometer, of 700 $sec^{-1}$ or more.

**3.** The olefin-based polymer of claim 1, wherein the olefin-based polymer is prepared by polymerization of ethylene and at least one α-olefin in the presence of a hybrid metallocene catalyst, and the hybrid metallocene catalyst includes: (a) at least one first transition metal compound selected from transition metal compounds represented by the following Chemical Formula 1 and transition metal compounds represented by the following Chemical Formula 2; (b) at least one second transition metal compound selected from transition metal compounds represented by the following Chemical Formula 3; (c) at least one third transition metal compound selected from transition metal compounds represented by the following Chemical Formula 4, transition metal compounds represented by the following Chemical Formula 5a, and transition metal compounds represented by the following Chemical Formula 5b; and (d) a cocatalyst compound:

[Chemical Formula 1] [Chemical Formula 2] [Chemical Formula 3]

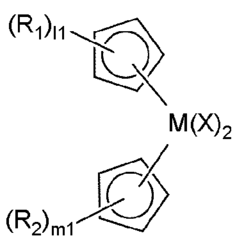

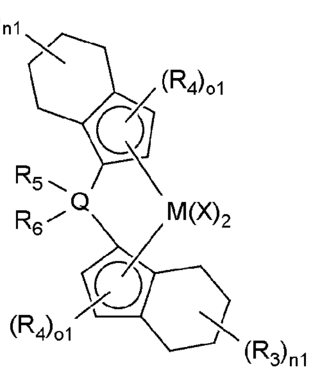

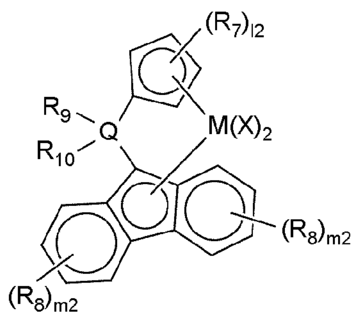

[Chemical Formula 4] [Chemical Formula 5a]

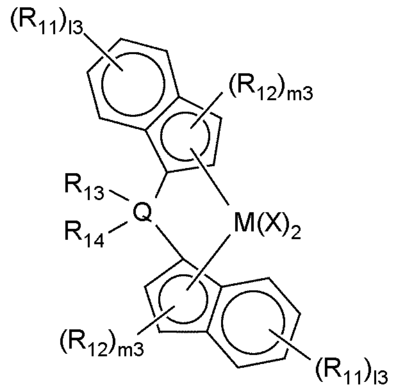

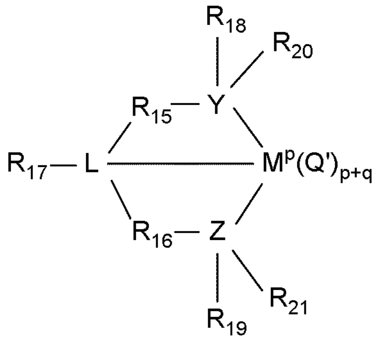

[Chemical Formula 5b]

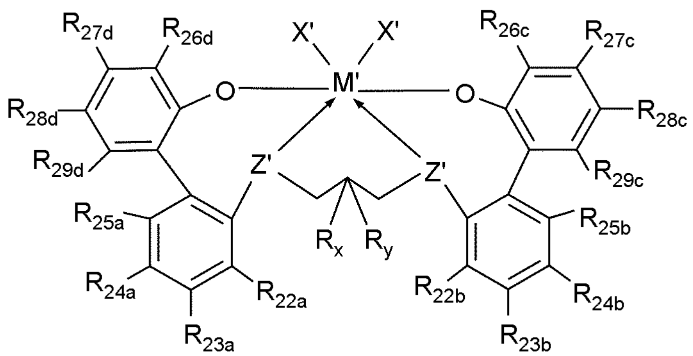

wherein l1 and m1 are independently of each other an integer of 0 to 5,
l2, l3, m2, and n1 are independently of one another an integer of 0 to 4,
m3 and o1 are independently of each other an integer of 0 to 2,
p is an oxidation state of M, and is +3, +4, or +5,
q is a formal charge of a YZL ligand, and is 0, -1, - 2, or -3,
M is independently of each other titanium (Ti), zirconium (Zr), or hafnium (Hf),
M' is titanium, zirconium, or hafnium, and is in a formal oxidation state of +2, +3, or +4,
X is independently of each other a halogen, $C_{1-20}$ alkyl, $C_{2-20}$ alkenyl, $C_{2-20}$ alkynyl, $C_{6-20}$ aryl, $C_{1-20}$ alkyl $C_{6-20}$ aryl, $C_{6-20}$ aryl $C_{1-20}$ alkyl, $C_{1-20}$ alkylamido, or $C_{6-20}$ arylamido,
X' is independently of each other alkyl,
Q is independently of each other carbon (C), silicon (Si), germanium (Ge), or tin (Sn),
Q' is an anionic leaving group and is independently of each other hydrogen, a substituted or unsubstituted $C_{1-40}$ hydrocarbon group, a substituted or unsubstituted $C_{1-40}$ heterohydrocarbon group, a heteroatom, or a halogen,
L is a Group 15 or Group 16 element,
Y is a Group 15 element,
Z is a Group 15 element,
Z' is independently of each other -O-, -S-, -N($C_{1-40}$ hydrocarbon group)-, or -P($C_{1-40}$ hydrocarbon group)-,
$R_1$ to $R_4$, $R_7$, $R_8$, $R_{11}$, and $R_{12}$ are independently of one another substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl, substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but these may or may not be independently of each other connected to an adjacent group to form a substituted or unsubstituted, saturated or unsaturated $C_{4-20}$ ring,
$R_5$, $R_6$, $R_9$, $R_{10}$, $R_{13}$, and $R_{14}$ are independently of each other substituted or unsubstituted $C_{1-20}$ alkyl, substituted or unsubstituted $C_{2-20}$ alkenyl, substituted or unsubstituted $C_{6-20}$ aryl, substituted or unsubstituted $C_{1-20}$ alkyl $C_{6-20}$ aryl, substituted or unsubstituted $C_{6-20}$ aryl $C_{1-20}$ alkyl, substituted or unsubstituted $C_{1-20}$ heteroalkyl,

substituted or unsubstituted $C_{3-20}$ heteroaryl, substituted or unsubstituted $C_{1-20}$ alkylamido, substituted or unsubstituted $C_{6-20}$ arylamido, or substituted or unsubstituted $C_{1-20}$ silyl, but $R_5$ and $R_6$, $R_9$ and $R_{10}$, and $R_{13}$ and $R_{14}$ may or may not be independently of one another connected to each other to form a substituted or unsubstituted, saturated or unsaturated $C_{2-20}$ ring,

$R_{15}$ and $R_{16}$ are independently of each other a $C_{1-20}$ hydrocarbon group or a heteroatom-containing group, in which the heteroatom is silicon, germanium, tin, lead, or phosphorus, or $R_{15}$ and $R_{16}$ may be connected to each other,

$R_{17}$ does not exist, or is hydrogen, $C_{1-20}$ alkyl, a halogen, or a heteroatom-containing group,

$R_{18}$ and $R_{19}$ are independently of each other an alkyl group, an aryl group, a substituted aryl group, a cyclic alkyl group, a substituted cyclic alkyl group, or a polycyclic system,

$R_{20}$ and $R_{21}$ independently of each other do not exist, or may be hydrogen, an alkyl group, a halogen, a heteroatom, a hydrocarbon group, or a heteroatom-containing group,

$R_x$ and $R_y$ are independently of each other a substituted or unsubstituted $C_{1-40}$ hydrocarbon group, a substituted or unsubstituted $C_{1-40}$ heterohydrocarbon group, a halogen, or a hydrogen, and

$R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ are independently of one another selected from a substituted or unsubstituted $C_{1-40}$ hydrocarbon group, a substituted or unsubstituted $C_{1-40}$ heterohydrocarbon group, $-Si(R_e)_3$, $-OSi(R_e)_3$, $-Ge(R_e)_3$, $-P(R_e)_2$, $-N(R_e)_2$, $-OR_e$, $-SR_e$, $-NO_2$, $-CN$, $-CF_3$, $-OCF_3$, $-S(O)R_e$, $-S(O)_2R_e$, $-N{=}C(R_e)_2$, $-OC(O)R_e$, $-C(O)OR_e$, $-N(R)C(O)R_e$, $-C(O)N(R_e)_2$, a halogen, and hydrogen, in which $R_e$ is independently of each other a substituted or unsubstituted $C_{1-30}$ hydrocarbon group or a substituted or unsubstituted $C_{1-30}$ heterohydrocarbon group, but two or more of $R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ may or may not form one or more cyclic structures.

**4.** The olefin-based polymer of claim 3, wherein the transition metal compound of Chemical Formula 1 is at least one of transition metal compounds represented by the following Chemical Formulae 1-1 to 1-8, and the transition metal compound of Chemical Formula 2 is a transition metal compound represented by the following Chemical Formula 2-1:

[Chemical Formula 1-1] [Chemical Formula 1-2]

[Chemical Formula 1-3]

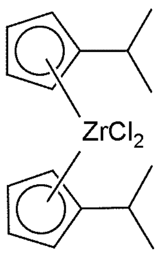

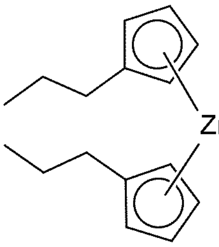

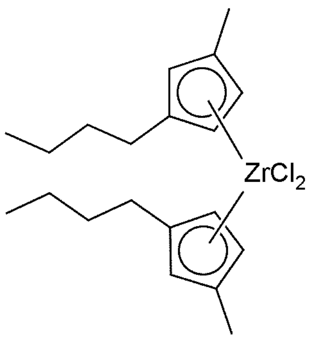

[Chemical Formula 1-4] [Chemical Formula 1-5]

[Chemical Formula 1-6]

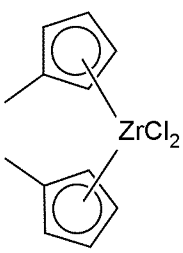

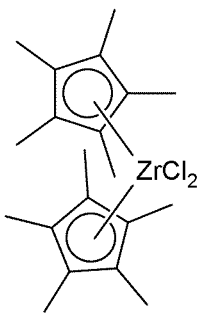

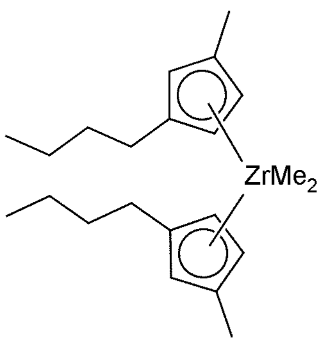

[Chemical Formula 1-7] [Chemical Formula 1-8]

[Chemical Formula 2-1]

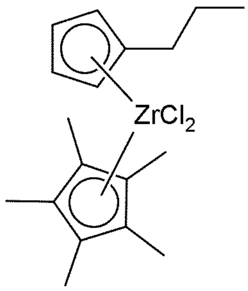

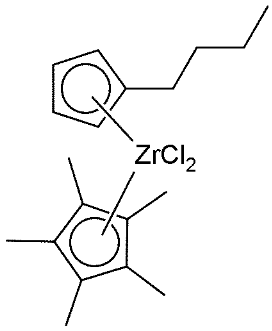

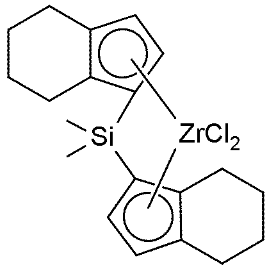

wherein Me is methyl.

**5.** The olefin-based polymer of claim 3, wherein the transition metal compound of Chemical Formula 3 is at least one of transition metal compounds represented by the following Chemical Formulae 3-1 to 3-10:

[Chemical Formula 3-1] [Chemical Formula 3-2]

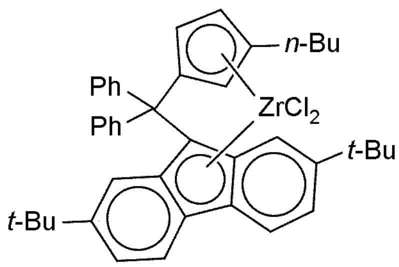

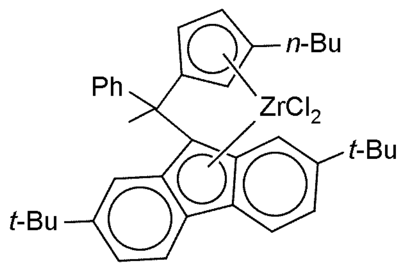

[Chemical Formula 3-3] [Chemical Formula 3-4]

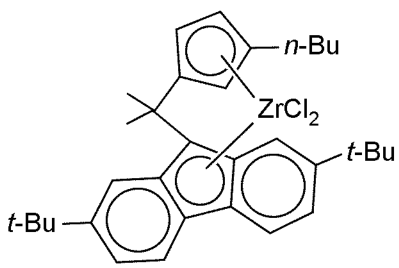

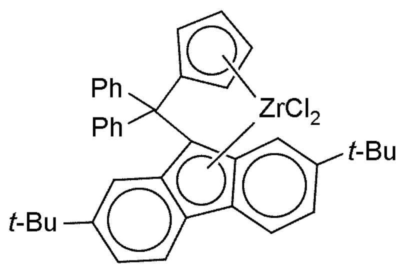

[Chemical Formula 3-5] [Chemical Formula 3-6]

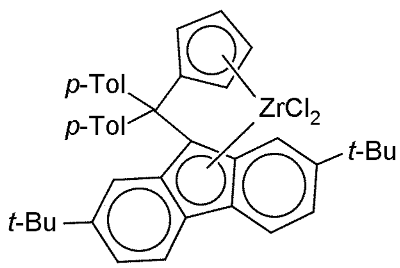

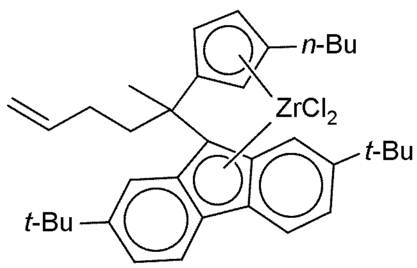

[Chemical Formula 3-7] [Chemical Formula 3-8]

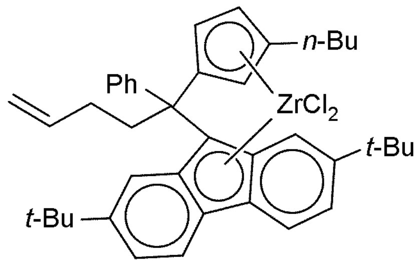

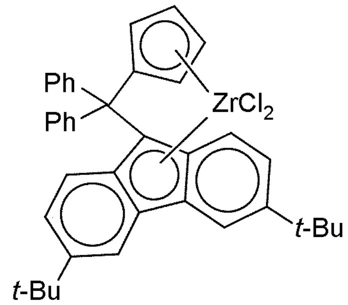

[Chemical Formula 3-9] [Chemical Formula 3-10]

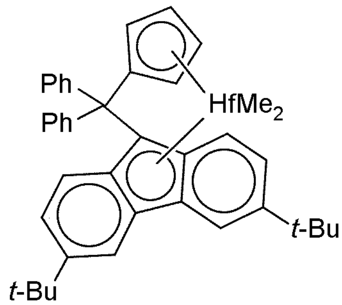

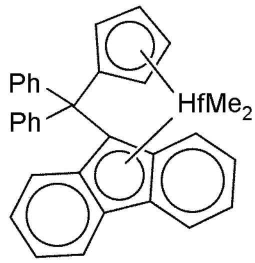

wherein Me is methyl, *n*-Bu is *n*-butyl, *t*-Bu is *t*-butyl, Ph is phenyl, and *p*-Tol is *p*-tolyl.

**6.** The olefin-based polymer of claim 3, wherein the transition metal compound of Chemical Formula 4 is at least one of transition metal compounds represented by the following Chemical Formulae 4-1 and 4-2, the transition metal compound of Chemical Formula 5a is at least one of transition metal compounds represented by the following Chemical Formulae 5-1 to 5-4, and the compound Chemical Formula 5b is at least one of transition metal compounds represented by the following Chemical Formulae 5-5 and 5-6:

[Chemical Formula 4-1] [Chemical Formula 4-2]

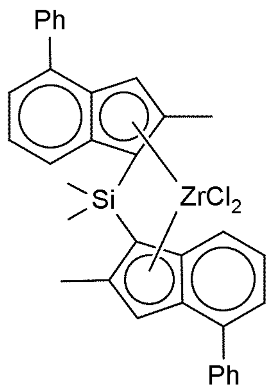

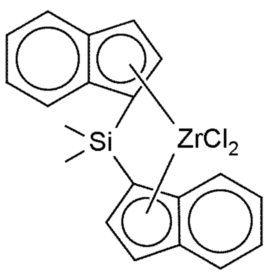

[Chemical Formula 5-1] [Chemical Formula 5-2]

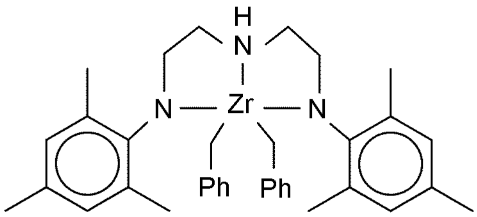

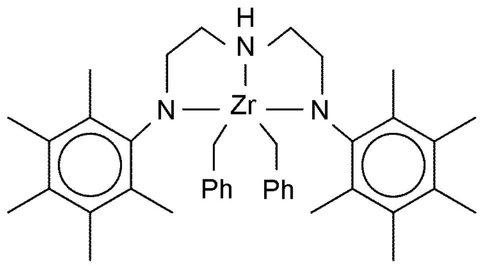

[Chemical Formula 5-3] [Chemical Formula 5-4]

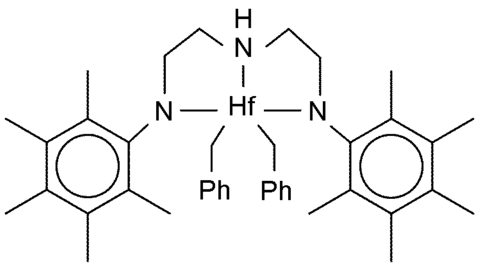

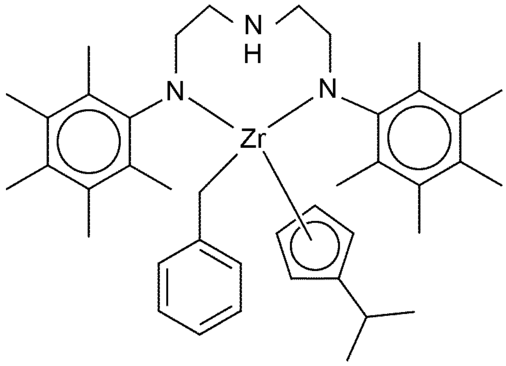

[Chemical Formula 5-5] [Chemical Formula 5-6]

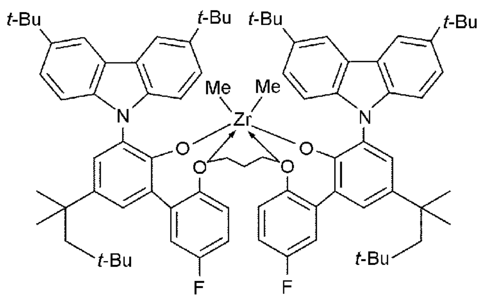

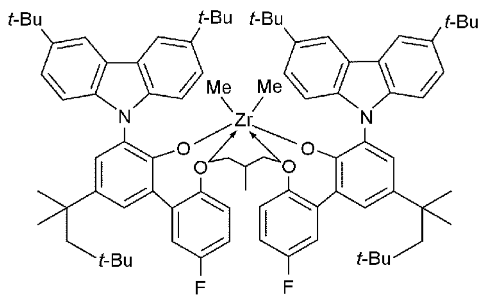

wherein Me is methyl, *t*-Bu is *t*-butyl, and Ph is phenyl.

**7.** The olefin-based polymer of claim 3, wherein the cocatalyst compound includes at least one selected from the group consisting of a compound represented by the following Chemical Formula 6, a compound represented by the following Chemical Formula 7, and a compound represented by Chemical Formula 8:

[Chemical Formula 6]

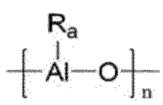

[Chemical Formula 7]

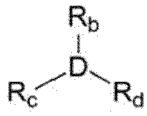

[Chemical Formula 8] $[L-H]^+[Z(A)_4]^-$ or $[L]^+[Z(A)_4]^-$

wherein n is an integer of 2 or more, and $R_a$ is a halogen atom, a hydrocarbon group having 1 to 20 carbon atoms, or a hydrocarbon group having 1 to 20 carbon atoms substituted by a halogen,
D is aluminum (Al) or boron (B), and $R_b$, $R_c$, and $R_d$ are independently of one another a halogen atom, a hydrocarbon group having 1 to 20 carbon atoms, a hydrocarbon group having 1 to 20 carbon atoms substituted by a halogen, or an alkoxy group having 1 to 20 carbon atoms, and
L is a neutral or cationic Lewis base, $[L-H]^+$ and $[L]^+$ are a Bronsted acid, Z is a Group 13 element, and A is independently of each other a substituted or unsubstituted aryl group having 6 to 20 carbon atoms or a substituted or unsubstituted alkyl group having 1 to 20 carbon atoms.

**8.** The olefin-based polymer of claim 7, wherein the compound represented by Chemical Formula 6 is at least one selected from the group consisting of methylaluminoxane, ethylaluminoxane, isobutylaluminoxane, and butylaluminoxane.

**9.** The olefin-based polymer of claim 7, wherein the compound represented by Chemical Formula 7 is at least one selected from the group consisting of trimethylaluminum, triethylaluminum, triisobutylaluminum, tripropylaluminum, tributylaluminum, dimethylchloroaluminum, triisopropylaluminum, tri-s-butylaluminum, tricyclopentylaluminum, tripentylaluminum, triisopentylaluminum, trihexylaluminum, trioctylaluminum, ethyldimethylaluminum, methyldiethylaluminum, triphenylaluminum, tri-*p*-tolylaluminum, dimethylaluminummethoxide, dimethylaluminumethoxide, trimethylboron, triethylboron, triisobutylboron, tripropylboron, and tributylboron.

**10.** The olefin-based polymer of claim 7, wherein the compound represented by Chemical Formula 8 is at least one selected from the group consisting of triethylammonium tetraphenylboron, tributylammonium tetraphenylboron, trimethylammonium tetraphenylboron, tripropylammonium tetraphenylboron, trimethylammonium tetra(p-tolyl)boron, trimethylammonium tetra(*o*,*p*-dimethylphenyl)boron, tributylammonium tetra(*p*-trifluoromethylphenyl)boron, trimethylammonium tetra(*p*-trifluoromethylphenyl)boron, tributylammonium tetrapentafluorophenylboron, N,N-diethylanilinium tetraphenylboron, N,N-diethylanilinium tetrapentafluorophenylboron, diethylammonium tetrapentafluorophenylboron, triphenylphosphonium tetraphenylboron, trimethylphosphonium tetraphenylboron, triethylammonium tetraphenylaluminum, tributylammonium tetraphenylaluminum, trimethylammonium tetraphenylaluminum, tripropylammonium tetraphenylaluminum, trimethylammonium tetra(*p*-tolyl)aluminum, tripropylammonium tetra(*p*-tolyl)aluminum, triethylammonium tetra(*o*,*p*-dimethylphenyl)aluminum, tributylammonium tetra(*p*-trifluoromethylphenyl)aluminum, trimethylammonium tetra(*p*-trifluoromethylphenyl)aluminum, tributylammonium tetrapentafluorophenylaluminum, N,N-diethylanilinium tetraphenylaluminum, N,N-diethylanilinium tetrapentafluorophenylaluminum, diethylammonium tetrapentatetraphenylaluminum, triphenylphosphonium tetraphenylaluminum, trimethylphosphonium tetraphenylaluminum, tripropylammonium tetra(*p*-tolyl)boron, triethylammonium tetra(*o*,*p*-dimethylphenyl)boron, triphenylcarbonium tetra(*p*-trifluoromethylphenyl)boron, and triphenylcarbonium tetrapentafluorophenylboron.

**11.** The olefin-based polymer of claim 3, wherein the hybrid metallocene catalyst further includes a carrier which supports the hybrid transition metal compound, the cocatalyst compound, or both of them.

**12.** The olefin-based polymer of claim 11, wherein the carrier includes at least one selected from the group consisting of silica, alumina, and magnesia.

**13.** The olefin-based polymer of claim 11, wherein a total amount of the hybrid transition metal compound supported on the carrier is 0.001 to 1 mmol based on 1 g of the carrier, and a total amount of the cocatalyst compound supported on the carrier is 2 to 15 mmol based on 1 g of the carrier.

**14.** A method for preparing an olefin-based polymer, the method comprising: polymerizing ethylene and at least one $\alpha$-olefin in the presence of a hybrid metallocene catalyst including: (a) at least one first transition metal compound selected from transition metal compounds represented by the following Chemical Formula 1 and transition metal

compounds represented by the following Chemical Formula 2; (b) at least one second transition metal compound selected from transition metal compounds represented by the following Chemical Formula 3; (c) at least one third transition metal compound selected from transition metal compounds represented by the following Chemical Formula 4, transition metal compounds represented by the following Chemical Formula 5a, and transition metal compounds represented by the following Chemical Formula 5b; and (d) a cocatalyst compound, thereby obtaining an olefin-based polymer, wherein the olefin-based polymer has a density of 0.930 to 0.970 g/cm3, a melt index ($I_{2.16}$) measured with a load of 2.16 kg at 190°C of 0.1 to 5.0 g/10 min, a ratio (melt flow ratio; MFR) between a melt index ($I_{21.6}$) measured with a load of 21.6 kg and a melt index ($I_{2.16}$) measured with a load of 2.16 kg at 190°C of 30 to 200, a unimodal molecular weight distribution having a shoulder when measured by gel permeation chromatography (GPC), and a shear rate defined by Equation 1 at which a melt fracture or shark skin is shown when measured with a capillary rheometer, of 500 $sec^{-1}$ or more:

[Chemical Formula 1] [Chemical Formula 2] [Chemical Formula 3]

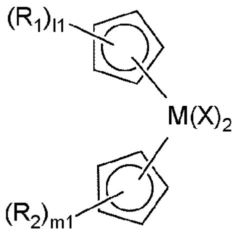

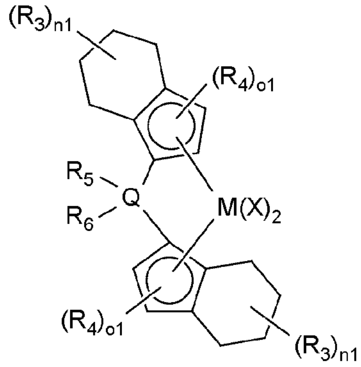

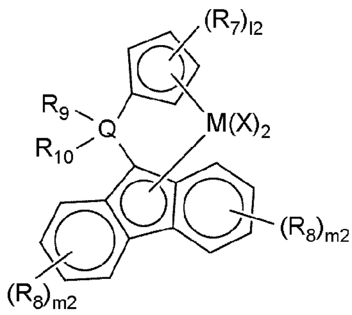

[Chemical Formula 4] [Chemical Formula 5a]

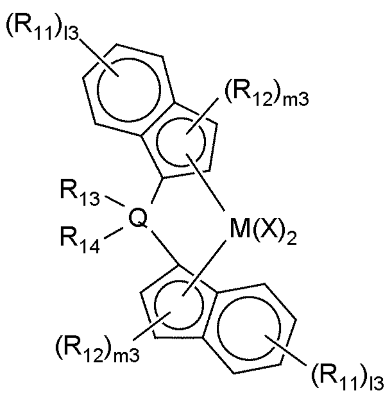

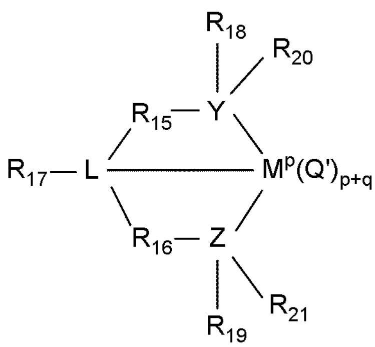

[Chemical Formula 5b]

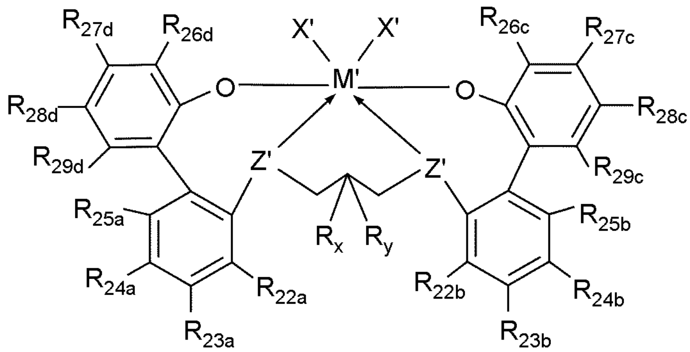

[Equation 1]

$$\gamma_{ap} = \frac{4V}{\pi R^3}$$

wherein l1, l2, l3, m1, m2, m3, n1, o1, p, q, M, M', X, X', Q, Q', L, Y, Z, Z', $R_1$ to $R_{21}$, $R_x$, $R_y$, $R_{22a}$, $R_{23a}$, $R_{24a}$, $R_{25a}$, $R_{22b}$, $R_{23b}$, $R_{24b}$, $R_{25b}$, $R_{26c}$, $R_{27c}$, $R_{28c}$, $R_{29c}$, $R_{26d}$, $R_{27d}$, $R_{28d}$, and $R_{29d}$ are as defined in claim 3, and $\gamma_{ap}$, V, and R are as defined in claim 1.

**15.** The method for preparing an olefin-based polymer of claim 14, wherein the α-olefin is at least one selected from the group consisting of propylene, 1-butene, 1-pentene, 4-methyl-1-pentene, 1-hexene, 1-heptene, 1-octene, 1-decene, 1-undecene, 1-dodecene, 1-tetradecene, and 1-hexadecene.

**16.** The method for preparing an olefin-based polymer of claim 15, wherein the α-olefin is 1-hexene.

**17.** The method for preparing an olefin-based polymer of claim 14, wherein the polymerization of ethylene and at least one α-olefin is performed by gas phase polymerization.

[FIG. 1]

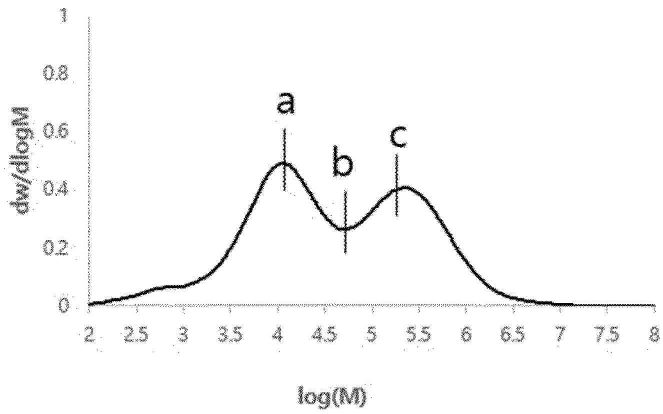
1
0.8
0.6
0.4
0.2
0
dw/dlogM
a
b
c
2
2.5
3
3.5
4
4.5
5
5.5
6
6.5
7
7.5
8
log(M)

[FIG. 2]

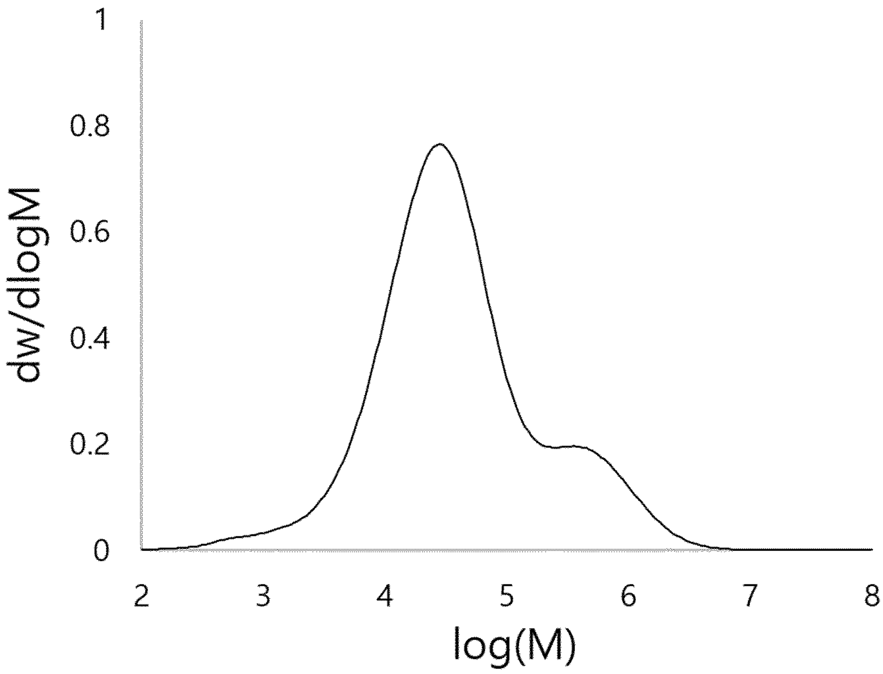
1
0.8
0.6
0.4
0.2
0
dw/dlogM
2
3
4
5
6
7
8
log(M)

[FIG. 3]

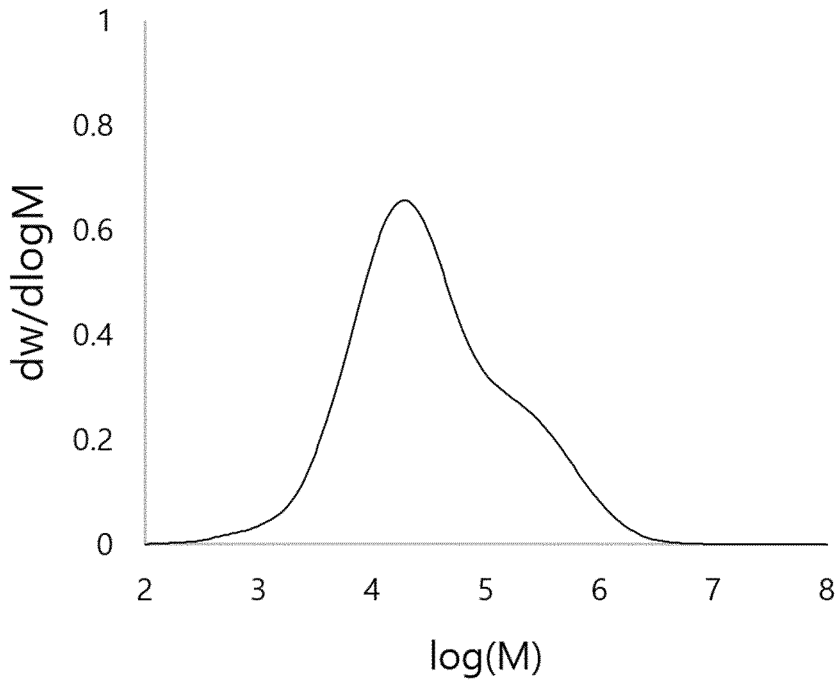
1
0.8
0.6
0.4
0.2
0
dw/dlogM
2
3
4
5
6
7
8
log(M)

[FIG. 4]

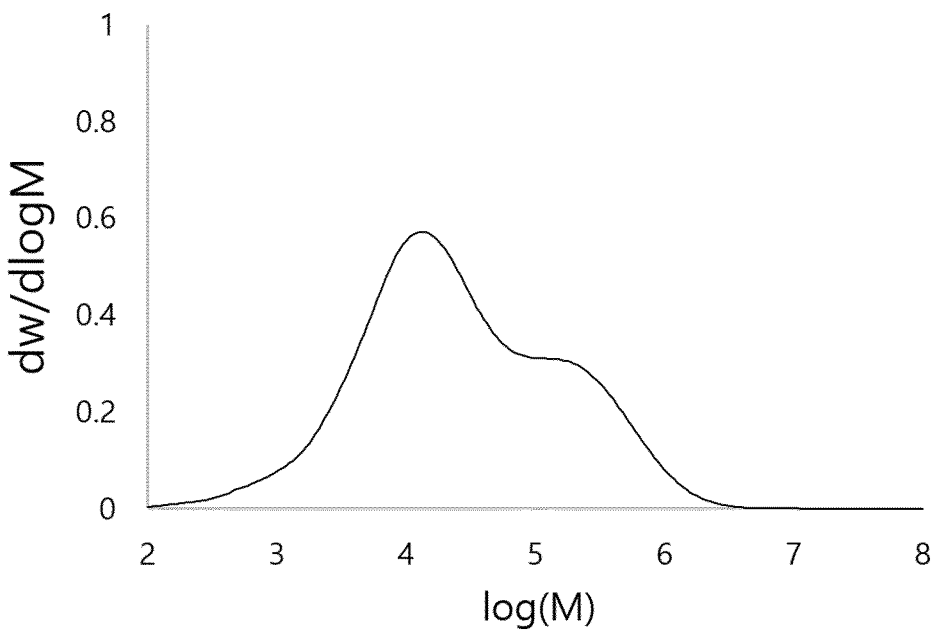
1
0.8
0.6
0.4
0.2
0
dw/dlogM
2
3
4
5
6
7
8
log(M)

[FIG. 5]

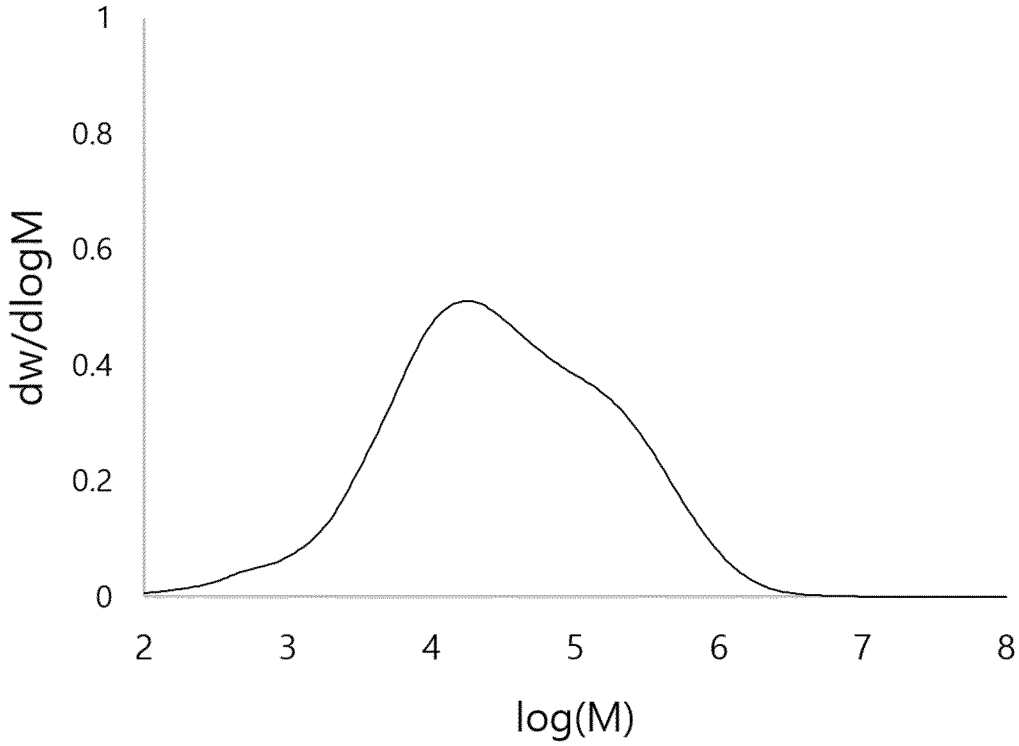
1
0.8
0.6
0.4
0.2
0
dw/dlogM
2
3
4
5
6
7
8
log(M)

[FIG. 6]

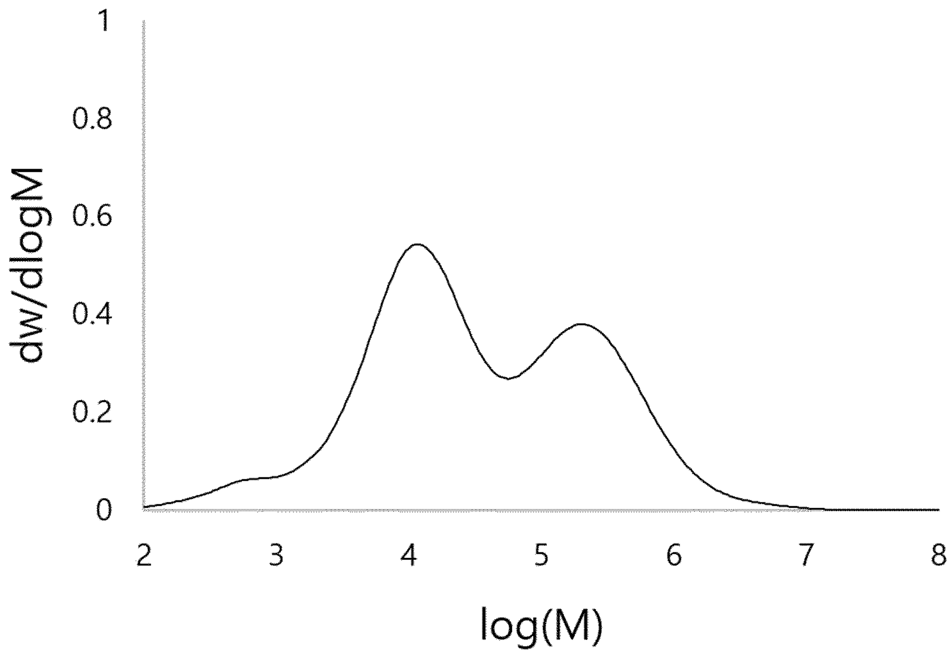
1
0.8
0.6
0.4
0.2
0
dw/dlogM
2
3
4
5
6
7
8
log(M)

[FIG. 7]

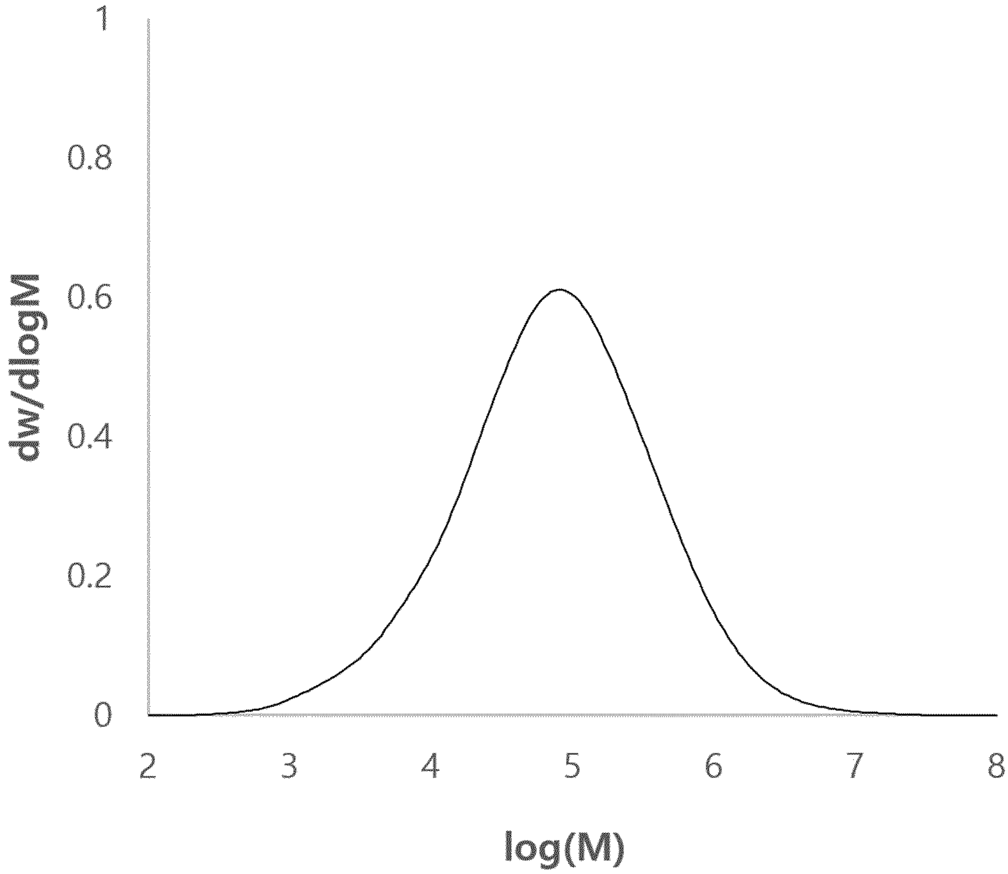

[FIG. 8]

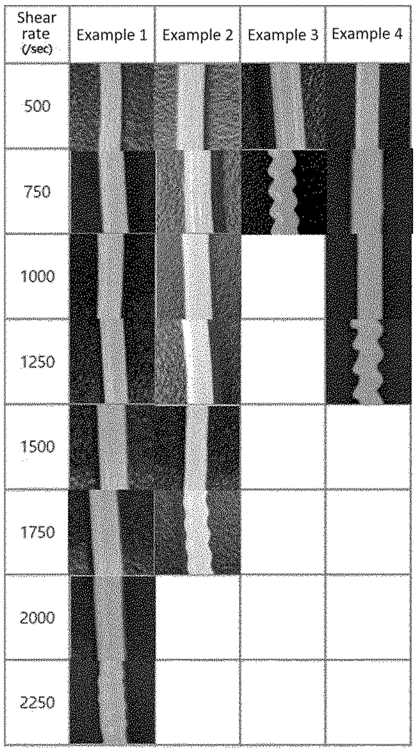
Shear rate (/sec)
Example 1
Example 2
Example 3
Example 4
500
750
1000
1250
1500
1750
2000
2250

[FIG. 9]

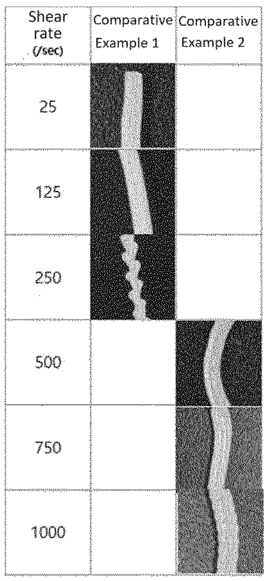
Shear rate (/sec)
Comparative Example 1
Comparative Example 2
25
125
250
500
750
1000

**INTERNATIONAL SEARCH REPORT**

International application No. **PCT/KR2022/018463**

**A. CLASSIFICATION OF SUBJECT MATTER**

**C08F 210/16**(2006.01)i; **C08F 210/14**(2006.01)i; **C08F 4/659**(2006.01)i; **C08F 4/6592**(2006.01)i; **C08F 4/60**(2006.01)i

According to International Patent Classification (IPC) or to both national classification and IPC

**B. FIELDS SEARCHED**

Minimum documentation searched (classification system followed by classification symbols)

C08F 210/16(2006.01); C08F 10/00(2006.01); C08F 210/02(2006.01); C08F 210/06(2006.01); C08F 4/64(2006.01); C08F 4/642(2006.01); C08F 4/70(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 유니모달(unimodal), 넓은 분자량(broad molecular weight distribution), 올레핀 중합체(olefin polymer), 혼성 메탈로센 촉매(hybrid metallocene catalyst)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0075963 A (HANWHA SOLUTIONS CORPORATION) 29 June 2020 (2020-06-29) See claims 1 and 7-12; paragraphs [0054], [0084], [0085], [0092], [0093], [0140], [0167] and [0171]; and figures 1-13. | 1-17 |
| Y | JP 2000-191719 A (MITSUI CHEMICALS INC.) 11 July 2000 (2000-07-11) See claim 1; and paragraphs [0007], [0109] and [0110]. | 1-17 |
| A | EP 0893454 A1 (MITSUI CHEMICALS, INC.) 27 January 1999 (1999-01-27) See page 17. | 1-17 |
| A | US 5350817 A (WINTER, A. et al.) 27 September 1994 (1994-09-27) See entire document. | 1-17 |
| A | EP 1614699 A1 (MITSUI CHEMICALS, INC.) 11 January 2006 (2006-01-11) See entire document. | 1-17 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 March 2023** | **08 March 2023** |
| Name and mailing address of the ISA/KR<br>**Korean Intellectual Property Office**<br>**Government Complex-Daejeon Building 4, 189 Cheongsa-ro, Seo-gu, Daejeon 35208**<br>Facsimile No. **+82-42-481-8578** | Authorized officer<br><br>Telephone No. |

Form PCT/ISA/210 (second sheet) (July 2022)

**INTERNATIONAL SEARCH REPORT**
**Information on patent family members**

International application No.
**PCT/KR2022/018463**

| Patent document cited in search report | Publication date (day/month/year) | Patent family member(s) | Publication date (day/month/year) |
|---|---|---|---|
| KR 10-2020-0075963 A | 29 June 2020 | CN 113227171 A | 06 August 2021 |
| | | EP 3885374 A1 | 29 September 2021 |
| | | EP 3885374 A4 | 14 September 2022 |
| | | JP 2022-515730 A | 22 February 2022 |
| | | KR 10-2272245 B1 | 02 July 2021 |
| | | US 2022-0064344 A1 | 03 March 2022 |
| | | WO 2020-130452 A1 | 25 June 2020 |
| JP 2000-191719 A | 11 July 2000 | None | |
| EP 0893454 A1 | 27 January 1999 | CA 2251471 A1 | 13 August 1998 |
| | | CN 1220672 A | 23 June 1999 |
| | | EP 0893454 A4 | 24 January 2001 |
| | | ID 20751 A | 25 February 1999 |
| | | JP 10-309038 A | 17 November 1998 |
| | | KR 10-0309947 B1 | 18 October 2001 |
| | | KR 10-0309948 B1 | 18 October 2001 |
| | | KR 10-0309949 B1 | 18 October 2001 |
| | | KR 10-0320331 B1 | 20 June 2002 |
| | | KR 10-2000-0064869 A | 06 November 2000 |
| | | US 6255419 B1 | 03 July 2001 |
| | | WO 98-34961 A1 | 13 August 1998 |
| US 5350817 A | 27 September 1994 | AT 136040 T | 15 April 1996 |
| | | AT 199911 T | 15 April 2001 |
| | | AU 1713392 A | 03 December 1992 |
| | | AU 656968 B2 | 23 February 1995 |
| | | CA 2069602 A1 | 28 November 1992 |
| | | EP 0516018 A2 | 02 December 1992 |
| | | EP 0516018 A3 | 03 March 1993 |
| | | EP 0516018 B1 | 27 March 1996 |
| | | EP 0702030 A1 | 20 March 1996 |
| | | EP 0702030 B1 | 21 March 2001 |
| | | ES 2087339 T3 | 16 July 1996 |
| | | ES 2155492 T3 | 16 May 2001 |
| | | JP 05-140227 A | 08 June 1993 |
| | | JP 3404493 B2 | 06 May 2003 |
| | | KR 10-0216331 B1 | 16 August 1999 |
| | | KR 10-1992-0021594 A | 18 December 1992 |
| | | RU 2101296 C1 | 10 January 1998 |
| | | US 5714427 A | 03 February 1998 |
| EP 1614699 A1 | 11 January 2006 | AU 2003-292690 A1 | 25 October 2004 |
| | | AU 2003-292690 B2 | 20 November 2008 |
| | | AU 2009-200064 A1 | 05 February 2009 |
| | | AU 2009-200066 A1 | 05 February 2009 |
| | | AU 2009-200068 A1 | 05 February 2009 |
| | | CN 100457794 C | 04 February 2009 |
| | | CN 101423526 A | 06 May 2009 |
| | | CN 101423526 B | 06 June 2012 |
| | | CN 101423578 A | 06 May 2009 |
| | | CN 101423578 B | 13 October 2010 |
| | | CN 101440179 A | 27 May 2009 |
| | | CN 101440179 B | 21 September 2011 |

Form PCT/ISA/210 (patent family annex) (July 2022)

**INTERNATIONAL SEARCH REPORT**
**Information on patent family members**

International application No.
**PCT/KR2022/018463**

| Patent document cited in search report | Publication date (day/month/year) | Patent family member(s) | Publication date (day/month/year) |
|---|---|---|---|
| | | CN 1759128 A | 12 April 2006 |
| | | EP 1614699 A4 | 09 August 2006 |
| | | EP 1614699 B1 | 15 October 2008 |
| | | EP 1614699 B9 | 16 December 2009 |
| | | EP 1985637 A1 | 29 October 2008 |
| | | EP 1985637 B1 | 03 March 2010 |
| | | EP 1985638 A1 | 29 October 2008 |
| | | EP 1985638 B1 | 17 February 2010 |
| | | EP 1988104 A1 | 05 November 2008 |
| | | EP 1988104 B1 | 03 March 2010 |
| | | JP 2004-051801 A | 19 February 2004 |
| | | JP 2010-163626 A | 29 July 2010 |
| | | JP 2010-196066 A | 09 September 2010 |
| | | JP 2010-209086 A | 24 September 2010 |
| | | JP 2011-021203 A | 03 February 2011 |
| | | JP 2013-064161 A | 11 April 2013 |
| | | JP 4675629 B2 | 27 April 2011 |
| | | JP 5216066 B2 | 19 June 2013 |
| | | JP 5308393 B2 | 09 October 2013 |
| | | JP 5398626 B2 | 29 January 2014 |
| | | KR 10-1004338 B1 | 28 December 2010 |
| | | KR 10-1024894 B1 | 31 March 2011 |
| | | KR 10-1045559 B1 | 01 July 2011 |
| | | KR 10-1087179 B1 | 25 November 2011 |
| | | KR 10-2005-0118208 A | 15 December 2005 |
| | | KR 10-2010-0060037 A | 04 June 2010 |
| | | KR 10-2010-0060038 A | 04 June 2010 |
| | | KR 10-2010-0070376 A | 25 June 2010 |
| | | TW 200424222 A | 16 November 2004 |
| | | TW I296270 B | 01 May 2008 |
| | | US 2006-0276607 A1 | 07 December 2006 |
| | | US 2008-0292896 A1 | 27 November 2008 |
| | | US 2008-0306219 A1 | 11 December 2008 |
| | | US 2008-0306234 A1 | 11 December 2008 |
| | | US 2008-0312461 A1 | 18 December 2008 |
| | | US 2009-0043050 A1 | 12 February 2009 |
| | | US 2011-0196103 A1 | 11 August 2011 |
| | | US 7488789 B2 | 10 February 2009 |
| | | US 7678934 B2 | 16 March 2010 |
| | | US 7728078 B2 | 01 June 2010 |
| | | US 7737239 B2 | 15 June 2010 |
| | | US 7767313 B2 | 03 August 2010 |
| | | WO 2004-087775 A1 | 14 October 2004 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4935474 A
- US 6828394 B
- US 6894128 B
- KR 1437509
- US 6841631 B